# EUROPEAN PATENT APPLICATION

(11) **EP 4 561 192 A1**
(43) Date of publication of application: **28.05.2025**
(21) Application number: 23862249.2
(22) Date of filing: 30.08.2023
(51) Int. Cl.: H04W 52/02

(54) **WIRELESS ACCESS METHOD, ACCESS POINT DEVICE, STATION DEVICE, AND SYSTEM**

(30) Priority: 09.09.2022 CN 202211115159
(71) Applicant: Huawei Technologies Co., Ltd., Shenzhen, Guangdong 518129 (CN)
(72) Inventor: DING, Ji, Shenzhen, Guangdong 518129 (CN); GUO, Yongkang, Shenzhen, Guangdong 518129 (CN); XIA, Jikang, Shenzhen, Guangdong 518129 (CN); ZHOU, Ming, Shenzhen, Guangdong 518129 (CN)
(74) Representative: Goddar, Heinz J.
(86) International application number: PCT/CN2023/115900
(87) International publication number: WO 2024/051554

(57) **Abstract**

This application provides a wireless access method, an access point device, a station device, and a system, and relates to the field of communication technologies, to resolve problems of high power consumption and short battery life of the station device. The wireless access method includes: receiving a first beacon frame sent by the access point device, where the first beacon frame carries low power information; determining a receiving length based on a location of the low power information in the first beacon frame; and receiving, based on the receiving length, a second beacon frame sent by the access point device, where the receiving length is less than an original length of the second beacon frame, and the second beacon frame and the first beacon frame are in a same format.

## Description

This application claims priority to Chinese Patent Application No. 202211115159.9, filed with the China National Intellectual Property Administration on September 9, 2022 and entitled "WIRELESS ACCESS METHOD, ACCESS POINT DEVICE, STATION DEVICE, AND SYSTEM", which is incorporated herein by reference in its entirety.

### TECHNICAL FIELD

This application relates to the field of communication technologies, and in particular, to a wireless access method, an access point device, a station device, and a system.

### BACKGROUND

Intelligent control systems increase with the development of internet of things technologies. An intelligent control system mainly includes an access point (Access Point, AP) device and at least one station (Station, STA) device. A plurality of station devices are connected through the access point device, to implement a communication function. During actual application, the station device needs to maintain a network connection to the access point device for a long time to meet a normal service requirement. For most station devices powered by a battery, maintaining a network connection to the access point device for a long time accelerates power consumption of the station devices, and greatly shortens battery life of the station devices. Therefore, how to effectively prolong use time of continuous working of a terminal device and save power of the terminal device becomes a technical problem to be resolved.

### SUMMARY

Embodiments of this application provide a wireless access method, an access point device, a station device, and a system, to reduce power consumption of the station device and prolong battery life of the station device.

According to a first aspect, this application provides a wireless access method, applied to a station device. The method includes:
receiving a first beacon frame sent by an access point device, where the first beacon frame carries low power information;
determining a receiving length based on a location of the low power information in the first beacon frame; and
receiving, based on the receiving length, a second beacon frame sent by the access point device, where the receiving length is less than an original length of the second beacon frame, and the second beacon frame and the first beacon frame are in a same format.

According to the wireless access method provided in this embodiment of this application, when receiving the beacon frame sent by the access point device, the station device determines, based on the location of the low power information in the received first beacon frame, the receiving length for receiving the second beacon frame by the station device, and further receives, based on the receiving length, the second beacon frame sent by the access point device. In this way, the receiving length of the second beacon frame received by the station device is less than an original length of the second beacon frame. This effectively reduces time for receiving the second beacon frame by the station device, and reduces power consumption of receiving the second beacon frame by the station device.

The wireless access method provided in the foregoing embodiment may be applied to a wireless access system. For example, the wireless access system may be a wireless communication system like a smart home system, intelligent security protection, intelligent agriculture, or intelligent power control.

The station device may be a terminal device like a door lock, a refrigerator, an air conditioner, a door and a window, a water meter, an electricity meter, a gas meter, or a sensor. The station device may alternatively be a terminal device like a mobile phone, a personal digital assistant, a tablet computer, a vehicle-mounted computer, a laptop computer, a smart screen, an ultra-mobile personal computer, or a wearable device. It should be noted that, for a station device powered by a battery, like a door lock, a water meter, an electricity meter, or a gas meter, battery life of the station device can be effectively prolonged by using the method provided in this application.

With reference to the first aspect, in some implementations of the first aspect, the first beacon frame is a 1^{st} beacon frame that is sent by the access point device and that is received by the station device after the station device establishes a connection to the access point device; and the second beacon frame is a beacon frame received by the station device after the station device receives the first beacon frame.

With reference to the first aspect, in some implementations of the first aspect, the receiving length is a sum of an offset of the low power information in the first beacon frame and a length value of the low power information.

With reference to the first aspect, in some implementations of the first aspect, the method further includes: storing the offset and the length value in a preset register.

With reference to the first aspect, in some implementations of the first aspect, the low power information is located after a traffic indication map TIM field in the first beacon frame.

With reference to the first aspect, in some implementations of the first aspect, the low power information includes a first check field, and the first check field is used to carry a check value of data carried from a frame header of the first beacon frame to a previous field of the first check field.

With reference to the first aspect, in some implementations of the first aspect, the low power information is located in a frame body part of the first beacon frame.

With reference to the first aspect, in some implementations of the first aspect, the low power information includes a traffic indication map TIM field and a second check field, where the traffic indication map TIM field is located before the second check field, and the second check field is used to carry a check value of data carried from a 1^{st} field to a previous field of the second check field in the low power information.

According to a second aspect, an embodiment of this application provides a wireless access method, applied to an access point device, where the method includes:
generating a beacon frame; and
sending the beacon frame to a station device, where the beacon frame carries low power information, and the low power information is used by the station device to determine a receiving length of the beacon frame.

With reference to the second aspect, in some implementations of the second aspect, the generating a beacon frame includes:
obtaining a preset frame format and the low power information;
adding the low power information after a traffic indication map TIM field in the preset frame format, to obtain a target frame format; and
generating the beacon frame based on the target frame format and to-be-carried data.

With reference to the second aspect, in some implementations of the second aspect, the low power information includes a first check field, and the first check field is used to carry a check value of data carried from a frame header of the first beacon frame to a previous field of the first check field.

With reference to the second aspect, in some implementations of the second aspect, the generating a beacon frame includes:
obtaining a preset frame format and the low power information;
adding the low power information to a frame body part of the preset frame format, to obtain a second target frame format; and
generating the beacon frame based on the second target frame format and to-be-carried data.

With reference to the second aspect, in some implementations of the second aspect, the low power information includes a traffic indication map TIM field and a second check field, where the traffic indication map TIM field is located before the second check field, and the second check field is used to carry a check value of data carried from a 1^{st} field to a previous field of the second check field in the low power information.

With reference to the second aspect, in some implementations of the second aspect, the receiving length is a sum of an offset of the low power information in the beacon frame and a length value of the low power information.

According to a third aspect, an embodiment of this application provides a wireless access method, applied to an access point device, where the method includes:
receiving a probe request sent by a first station device, where the probe request carries a low power mark;
sending a first probe response and a second probe response to the first station device, where the first probe response carries the low power mark, the first probe response is used to establish a first connection to the first station device, and the second probe response is used to establish a second connection to the first station device;
if the access point device establishes the second connection to the first station device based on the second probe response, establishing the first connection to the first station device by using a basic service set transition request; and
sending a third beacon frame corresponding to the first connection, where a length of the third beacon frame is less than 130 bytes, and the third beacon frame carries the low power mark.

Based on the wireless access method provided in this embodiment of this application, the access point device sends a beacon frame whose byte length is less than 130 bytes, so that the station device can receive a beacon frame whose length is small, to reduce time for receiving the beacon frame by the station device, and further reduce power consumption of receiving the beacon frame by the station device.

The wireless access method provided in the foregoing embodiment may be applied to a wireless access system. For example, the wireless access system may be a wireless communication system like a smart home system, intelligent security protection, intelligent agriculture, or intelligent power control.

The station device may be a terminal device like a door lock, a refrigerator, an air conditioner, a door and a window, a water meter, an electricity meter, a gas meter, or a sensor. The station device may alternatively be a terminal device like a mobile phone, a personal digital assistant, a tablet computer, a vehicle-mounted computer, a laptop computer, a smart screen, an ultra-mobile personal computer, or a wearable device. It should be noted that, for a station device powered by a battery, like a door lock, a water meter, an electricity meter, or a gas meter, battery life of the station device can be effectively prolonged by using the method provided in this application.

With reference to the third aspect, in some implementations of the third aspect, the low power mark is located in a frame body part of the third beacon frame.

With reference to the third aspect, in some implementations of the third aspect, the method further includes:
establishing the second connection to a second station device; and
sending a fourth beacon frame corresponding to the second connection, where a length of the fourth beacon frame is greater than 130 bytes.

According to a fourth aspect, an embodiment of this application provides a wireless access method, applied to a first station device, where the method includes:
sending a probe request, where the probe request carries a low power mark;
if a second probe response sent by an access point device is received, establishing a second connection to the access point device;
receiving, through the second connection, a basic service set transition request sent by the access point device, where the basic service set transition request is used by the station device to establish a first connection to the access point device;
establishing the first connection to the access point device based on the basic service set transition request; and
receiving a third beacon frame that corresponds to the first connection and that is sent by the access point device, where a length of the third beacon frame is less than 130 bytes.

With reference to the fourth aspect, in some implementations of the fourth aspect, after the sending a probe request, the method further includes:
if a first probe response and the second probe response that are sent by the access point device are received, where the first probe response carries the low power mark, establishing the first connection to the access point device based on the low power mark.

With reference to the fourth aspect, in some implementations of the fourth aspect, the establishing the first connection to the access point device based on the low power mark includes:
displaying a first wireless access icon corresponding to the first probe response and a second wireless access icon corresponding to the second probe response, where the first wireless access icon includes a low power icon corresponding to the low power mark; and
establishing the first connection to the access point device in response to a selection operation performed by a user on the first wireless access icon.

With reference to the fourth aspect, in some implementations of the fourth aspect, the low power mark is located in a frame body part of the third beacon frame.

According to a fifth aspect, an embodiment of this application provides a station device, where the station device includes:
a first receiving module, configured to receive a first beacon frame sent by an access point device, where the first beacon frame carries low power information;
a determining module, configured to determine a receiving length based on a location of the low power information in the first beacon frame; and
a second receiving module, configured to receive, based on the receiving length, a second beacon frame sent by the access point device, where the receiving length is less than an original length of the second beacon frame, and the second beacon frame and the first beacon frame are in a same format.

With reference to the fifth aspect, in some implementations of the fifth aspect, the first beacon frame is a 1^{st} beacon frame that is sent by the access point device and that is received by the station device after the station device establishes a connection to the access point device; and the second beacon frame is a beacon frame received by the station device after the station device receives the first beacon frame.

With reference to the fifth aspect, in some implementations of the fifth aspect, the receiving length is a sum of an offset of the low power information in the first beacon frame and a length value of the low power information.

With reference to the fifth aspect, in some implementations of the fifth aspect, the method further includes:
a register module, configured to store the offset and the length value in a preset register.

With reference to the fifth aspect, in some implementations of the fifth aspect, the low power information is located after a traffic indication map TIM field in the first beacon frame.

With reference to the fifth aspect, in some implementations of the fifth aspect, the low power information includes a first check field, and the first check field is used to carry a check value of data carried from a frame header of the first beacon frame to a previous field of the first check field.

With reference to the fifth aspect, in some implementations of the fifth aspect, the low power information is located in a frame body part of the first beacon frame.

With reference to the fifth aspect, in some implementations of the fifth aspect, the low power information includes a traffic indication map TIM field and a second check field, where the traffic indication map TIM field is located before the second check field, and the second check field is used to carry a check value of data carried from a 1^{st} field to a previous field of the second check field in the low power information.

According to a sixth aspect, an embodiment of this application provides an access point device, where the access point device includes:
a generation module, configured to generate a beacon frame; and
a sending module, configured to send the beacon frame to a station device, where the beacon frame carries low power information, and the low power information is used by the station device to determine a receiving length of the beacon frame.

With reference to the sixth aspect, in some implementations of the sixth aspect, the generating a beacon frame includes:
obtaining a preset frame format and the low power information;
adding the low power information after a traffic indication map TIM field in the preset frame format, to obtain a target frame format; and
generating the beacon frame based on the target frame format and to-be-carried data.

With reference to the sixth aspect, in some implementations of the sixth aspect, the low power information includes a first check field, and the first check field is used to carry a check value of data carried from a frame header of the first beacon frame to a previous field of the first check field.

With reference to the sixth aspect, in some implementations of the sixth aspect, the generating a beacon frame includes:
obtaining a preset frame format and the low power information;
adding the low power information to a frame body part of the preset frame format, to obtain a second target frame format; and
generating the beacon frame based on the second target frame format and to-be-carried data.

With reference to the sixth aspect, in some implementations of the sixth aspect, the low power information includes a traffic indication map TIM field and a second check field, where the traffic indication map TIM field is located before the second check field, and the second check field is used to carry a check value of data carried from a 1^{st} field to a previous field of the second check field in the low power information.

With reference to the sixth aspect, in some implementations of the sixth aspect, the receiving length is a sum of an offset of the low power information in the beacon frame and a length value of the low power information.

According to a seventh aspect, an embodiment of this application provides an access point device, where the access point device includes:
a receiving module, configured to receive a probe request sent by a first station device, where the probe request carries a low power mark;
a first sending module, configured to send a first probe response and a second probe response to the first station device, where the first probe response carries the low power mark, the first probe response is used to establish a first connection to the first station device, and the second probe response is used to establish a second connection to the first station device;
a first connection module, configured to: if the access point device establishes the second connection to the first station device based on the second probe response, establish the first connection to the first station device by using a basic service set transition request; and
a second sending module, configured to send a third beacon frame corresponding to the first connection, where a length of the third beacon frame is less than 130 bytes, and the third beacon frame carries the low power mark.

With reference to the seventh aspect, in some implementations of the seventh aspect, the low power mark is located in a frame body part of the third beacon frame.

With reference to the seventh aspect, in some implementations of the seventh aspect, the access point device further includes:
a second connection module, configured to establish a second connection to a second station device; and
a third sending module, configured to send a fourth beacon frame corresponding to the second connection, where a length of the fourth beacon frame is greater than 130 bytes.

According to an eighth aspect, an embodiment of this application provides a station device, where the station device includes:
a first sending module, configured to send a probe request, where the probe request carries a low power mark;
a first connection module, configured to: if a second probe response sent by an access point device is received, establish a second connection to the access point device;
a second connection module, configured to receive, through the second connection, a basic service set transition request sent by the access point device, where the basic service set transition request is used by the station device to establish a first connection to the access point device;
a third connection module, configured to establish the first connection to the access point device based on the basic service set transition request; and
a receiving module, configured to receive a third beacon frame that corresponds to the first connection and that is sent by the access point device, where a length of the third beacon frame is less than 130 bytes.

With reference to the eighth aspect, in some implementations of the eighth aspect, after the sending a probe request, the station device further includes:
a fourth connection module, configured to: if a first probe response and the second probe response that are sent by the access point device are received, where the first probe response carries a low power mark, establish a first connection to the access point device based on the low power mark.

With reference to the eighth aspect, in some implementations of the eighth aspect, the establishing a first connection to the access point device based on the low power mark includes:
displaying a first wireless access icon corresponding to the first probe response and a second wireless access icon corresponding to the second probe response, where the first wireless access icon includes a low power icon corresponding to the low power mark; and
establishing the first connection to the access point device in response to a selection operation performed by a user on the first wireless access icon.

With reference to the eighth aspect, in some implementations of the eighth aspect, the low power mark is located in a frame body part of the third beacon frame.

According to a ninth aspect, this application provides a communication apparatus. The communication apparatus may be a station device, or a chip disposed in a station device. The communication apparatus includes: a processor, a memory, and a transceiver.

The transceiver is configured to receive and send a message.

The memory is configured to store instructions.

The processor is configured to execute the instructions stored in the memory. When the processor executes the instructions stored in the memory, the communication apparatus is enabled to perform the method performed in any one of the implementations of the first aspect or the method performed in any one of the implementations of the fourth aspect.

According to a tenth aspect, this application provides a communication apparatus. The communication apparatus may be an access point device, or a chip disposed in an access point device. The communication apparatus includes: a processor, a memory, and a transceiver.

The transceiver is configured to receive and send a message.

The memory is configured to store instructions.

The processor is configured to execute the instructions stored in the memory. When the processor executes the instructions stored in the memory, the communication apparatus is enabled to perform the method performed in any one of the implementations of the second aspect or the method performed in any one of the implementations of the third aspect.

According to an eleventh aspect, this application provides a station device, including at least one processor. The at least one processor is configured to: be coupled to a memory, and read and execute instructions in the memory, to implement the method performed in any one of the implementations of the first aspect or the method performed in any one of the implementations of the fourth aspect.

Optionally, the station device further includes the memory.

According to a twelfth aspect, this application provides an access point device, including at least one processor, where the at least one processor is configured to: be coupled to a memory, and read and execute instructions in the memory, to implement the method performed in any one of the implementations of the second aspect or the method performed in any one of the implementations of the third aspect.

According to a thirteenth aspect, a computer program product is provided, where the computer program product includes computer program code, and when the computer program code is run on a computer, the computer is enabled to perform the method performed in any one of the implementations of the first aspect to the fourth aspect.

It should be noted that all or some of the computer program code may be stored in a first storage medium. The first storage medium may be packaged together with a processor, or may be packaged separately from a processor. This is not specifically limited in this application.

According to a fourteenth aspect, a computer-readable medium is provided, where the computer-readable medium stores program code, and when the computer program code is run on a computer, the computer is enabled to perform the method performed in any one of the implementations of the first aspect to the fourth aspect.

According to a fifteenth aspect, a chip system is provided, including a processor, configured to invoke a computer program from a memory and run the computer program, so that a communication device installed with the chip system performs the method performed by a computer in any one of the implementations of the first aspect to the fourth aspect.

According to a sixteenth aspect, a wireless access system is provided. The wireless access system includes the access point device provided in the twelfth aspect and at least one station device provided in the eleventh aspect.

For technical effects of the second aspect and the fourth aspect to the sixteenth aspect provided in this application, refer to the technical effects of the possible implementations of the first aspect or the possible implementations of the third aspect. Details are not described herein again.

### BRIEF DESCRIPTION OF DRAWINGS

FIG. 1 is a diagram of a structure of a wireless access system according to an embodiment of this application;
FIG. 2 is a flowchart of an embodiment of a wireless access method according to an embodiment of this application;
FIG. 3 and FIG. 4 are diagrams of scenarios in which a mobile phone is used as a first station device according to an embodiment of this application;
FIG. 5 is an interaction diagram of a second connection between a first station device and an access point device according to an embodiment of this application;
FIG. 6 is an interaction diagram of a first connection between a first station device and an access point device according to an embodiment of this application;
FIG. 7 is a diagram of a structure of a format of a MAC frame defined based on the 802.11 protocol according to an embodiment of this application;
FIG. 8 is a diagram of a frame structure of a corresponding field in a frame body Frame Body defined based on the 802.11 protocol according to an embodiment of this application;
FIG. 9 is a diagram of a structure of a packet customized based on the 802.11 protocol according to an embodiment of this application;
FIG. 10 is a diagram of another structure of a packet customized based on the 802.11 protocol according to an embodiment of this application;
FIG. 11 is a flowchart of an embodiment of another wireless access method according to an embodiment of this application;
FIG. 12 is a diagram of a scenario of establishing a second connection according to an embodiment of this application;
FIG. 13 is a diagram of another scenario of establishing a first connection according to an embodiment of this application;
FIG. 14 is a flowchart of an embodiment of still another wireless access method according to this application;
FIG. 15 is a flowchart of an embodiment of yet another wireless access method according to this application;
FIG. 16 is a diagram of a structure of a first target frame format according to an embodiment of this application;
FIG. 17 to FIG. 19 are diagrams of a plurality of structures of a second target frame format according to an embodiment of this application;
FIG. 20 is a flowchart of another embodiment of a wireless access method according to an embodiment of this application;
FIG. 21 is a block diagram of an access point device according to an embodiment of this application;
FIG. 22 is a block diagram of another access point device according to an embodiment of this application;
FIG. 23 is a diagram of a structure of an access point device according to an embodiment of this application;
FIG. 24 is a block diagram of a station device according to an embodiment of this application;
FIG. 25 is a block diagram of another station device according to an embodiment of this application; and
FIG. 26 is a diagram of a structure of a station device according to an embodiment of this application.

### DESCRIPTION OF EMBODIMENTS

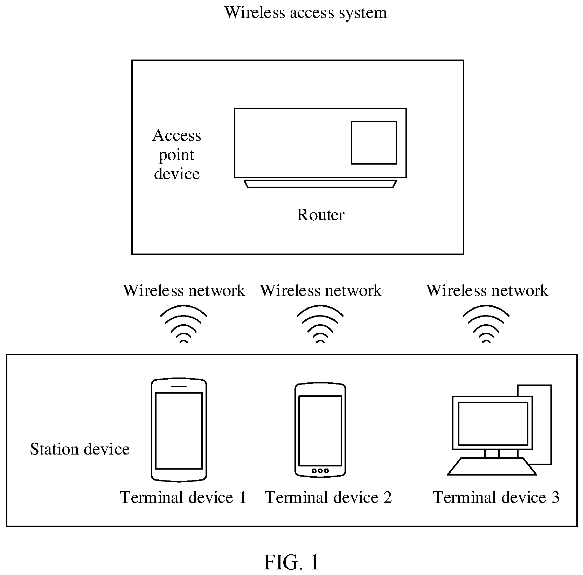

A wireless access method provided in embodiments of this application may be applied to a wireless access system shown in FIG. 1. The wireless access system includes an access point device and at least one station device. The access point device is communicatively connected to the station device through a wireless network (for example, a wireless network communication technology (Wireless Fidelity, Wi-Fi)).

The access point device may be a bridge configured to provide wireless network access, for example, a wireless router, or a terminal device like a mobile phone, a personal digital assistant, a tablet computer, a vehicle-mounted computer, a laptop computer, a smart screen, an ultra-mobile personal computer, or a wearable device that is used as a network hotspot device to perform network sharing.

The station device may be a terminal device like a door lock, a refrigerator, an air conditioner, a door and a window, a water meter, an electricity meter, a gas meter, and a sensor. Alternatively, the station device may be a terminal device like a mobile phone, a personal digital assistant, a tablet computer, a vehicle-mounted computer, a laptop computer, a smart screen, an ultra-mobile personal computer, or a wearable device. Specific types of the access point device and the station device are not limited in embodiments of this application.

It should be understood that the wireless access system may be a communication system that mainly includes an access point device and at least one station device, for example, a smart home system, smart security protection, intelligent agriculture, or intelligent power control. It should be understood that the wireless access system may be a communication system implemented according to the IEEE802.11 standard, or may be a communication system other than a communication system that complies with the IEEE802.11 standard. A specific type and composition of the wireless access system are not limited in this application.

To effectively reduce power consumption of the station device and prolong continuous working time of the station device, an embodiment of this application provides a wireless access method, to reduce a length of receiving a beacon frame by the station device, reduce time for receiving the beacon frame by the station device, and reduce power consumption of receiving the beacon frame by the station device. Especially for a station device powered by a battery, battery life of the station device can be effectively prolonged, and a battery life capability of the station device can be improved.

The wireless access method provided in this application may be implemented in at least two manners below. In one manner, the access point device sends a beacon frame whose byte length is less than 130 bytes, so that the station device receives a beacon frame whose length is small, to reduce time for receiving the beacon frame by the station device, and further reduce power consumption of receiving the beacon frame by the station device. It may be understood that the byte length of the beacon frame sent by the access point device in this implementation is merely an example for description. A byte length of a beacon frame sent by the access point device may change in different actual application scenarios. A specific byte length of the beacon frame sent by the access point device is not limited in this application. In the other manner, the station device intercepts a beacon frame of a specific length from a beacon frame sent by the access point device, to reduce time for receiving the beacon frame by the station device, and effectively reduce power consumption of receiving the beacon frame by the station device.

With reference to the accompanying drawings in embodiments of this application and related embodiments, the following uses the foregoing two manners as examples to describe the wireless access method provided in embodiments of this application.

First, example descriptions are given for the manner in which the access point device sends the beacon frame whose byte length is less than 130 bytes.

As shown in FIG. 1, to be compatible with a conventional station device, an access point device may provide both a conventional beacon frame and a low power beacon frame (referred to as a third beacon frame below) whose length is less than 130 bytes. In embodiments of this application, a universal wireless access point module and a low power wireless access point module may be integrated into the access point device. The universal wireless access point module can provide a conventional beacon frame, and a length of the conventional beacon frame is greater than 130 bytes. The universal wireless access point module is configured to provide a wireless network access service for a universal terminal device, where the universal terminal device is a station device that does not consider power consumption. The low power wireless access point module can provide the third beacon frame, where a length of the third beacon frame is less than 130 bytes, and the third beacon frame carries a low power mark. The low power wireless access point module is configured to provide a wireless network access service for a low power station device (referred to as a first station device below). The low power device may be a device having a low power mode, and the low power device can identify a beacon frame that is sent by the access point device and whose length is less than 130 bytes.

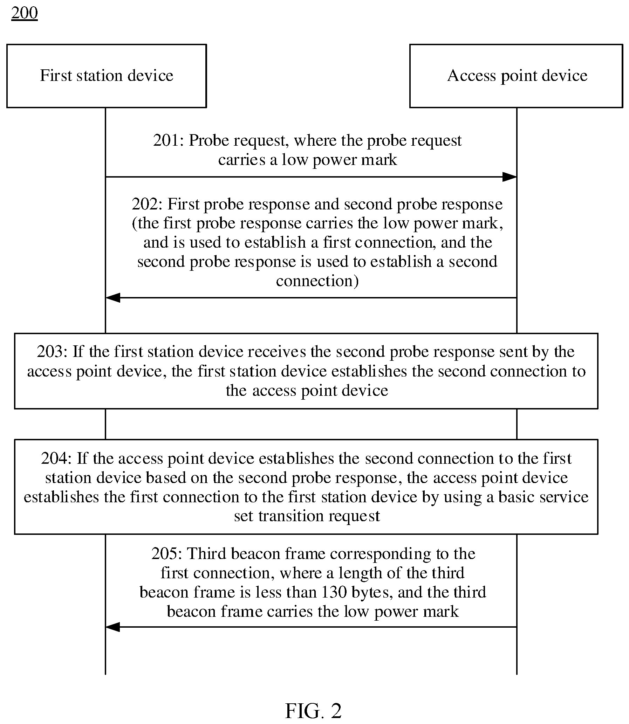

FIG. 2 is a flowchart of an embodiment of a wireless access method according to an embodiment of this application, and is mainly for a manner in which an access point device sends a beacon frame whose byte length is less than 130 bytes. As shown in FIG. 2, a wireless access method 200 includes the following steps.

Step 201: A first station device sends a probe request to an access point device, where the probe request carries a low power mark, and the access point device receives the probe request sent by the first station device.

In this embodiment of this application, the first station device may be a terminal device whose electric energy is provided by a battery, for example, an intelligent lock, a water meter, or a gas meter. Alternatively, the first station device may be a terminal device that is directly powered by a mains supply. In this case, a low power connection between the first station device and the access point device may be used to reduce overall power consumption of a wireless access system that mainly includes the first station device and the access point device, so as to save electric energy resources.

It should be understood that, that the first station device sends the probe request to the access point device corresponds to a process in which the first station device scans, in an active or passive manner, a radio signal corresponding to the access point device within a scanning signal range of the first station device during actual application.

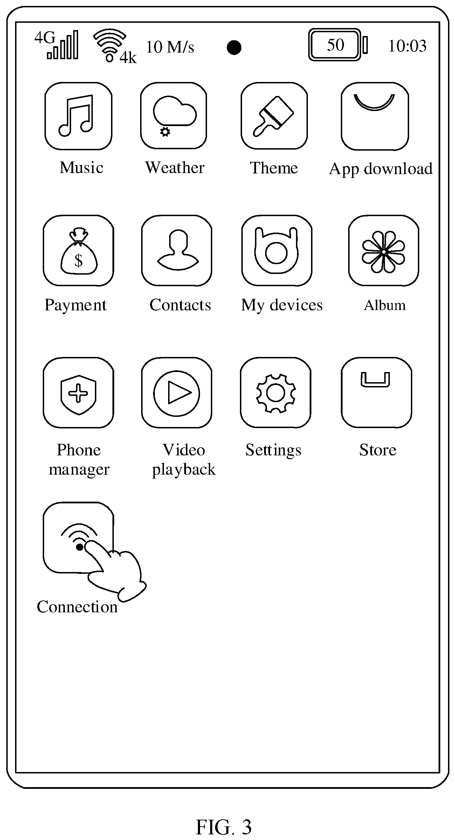

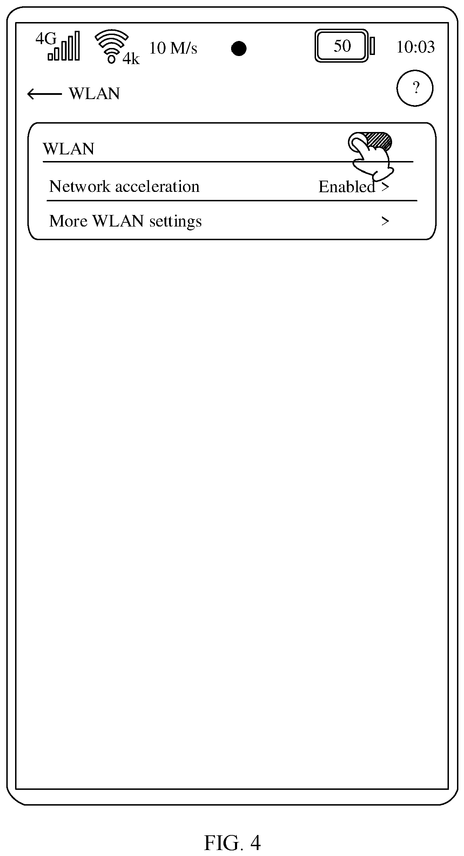

A mobile phone is used as the first station device, a router is used as the access point device, and a home screen shown in FIG. 3 is used as an example. Based on an actual application requirement of a user, the user may select, on the desktop shown in FIG. 3 by using an instruction like a voice instruction, an air gesture instruction, a touch instruction, or a physical button instruction, a "connect" icon (or a "settings" icon) displayed on the home screen. Then, an interface shown in FIG. 4 is displayed on the home screen of the mobile phone. Then, a "WLAN" button is enabled based on an operation like sliding or tapping of the user. When the "WLAN" button is slid or tapped, the mobile phone scans, in an active manner, a Wi-Fi signal sent by the router within a scanning signal range of the mobile phone, that is, sends a probe signal to the router.

For another example, an intelligent lock is used as the first station device, a router is used as the access point device, and a smart home system is used as a wireless access system. The smart home system may push a Wi-Fi signal corresponding to the router to the intelligent lock based on a specific service requirement, so that the intelligent lock passively sends a probe request to the router, and the intelligent lock establishes a communication connection with the smart home system through the router, to implement a corresponding service requirement function.

It is not difficult to understand that, to reduce power consumption of the first station device, in this embodiment of this application, the probe request sent by the first station device to the access point device carries the low power mark, so that the station device establishes a low power connection to the first station device by identifying a beacon frame that carries the low power mark. By way of example but not limitation, when the first station device is a mobile phone, and the access point device is a router, the mobile phone may directly send, to the router, a probe request that carries the low power mark, to connect to the router through a low power wireless access point module. This reduces power consumption of the mobile phone in a standby state and improves battery life of the mobile phone.

Certainly, during actual application, the probe request sent by the first station device to the access point device may not carry the low power mark. In this case, the first station device directly searches, by using the probe request sent to the access point device, for a beacon frame sent by the access point device within a scanning signal range of the first station device. This facilitates direct establishment of a communication connection to the access point device. For example, when the first station device is a mobile phone, and the access point device is a router, the mobile phone may also send, to the router, a probe request that does not carry the low power mark, to directly connect to the router.

Step 202: The access point device sends a first probe response and a second probe response to the first station device, where the first probe response carries the low power mark, the first probe response is used to establish a first connection to the first station device, and the second probe response is used to establish a second connection to the first station device.

It should be understood that the first connection may be a low power connection between the access point device and the first station device. The low power connection can effectively reduce standby power consumption of the first station device, and prolong standby duration of the first station device. The second connection may be a communication connection between a universal wireless access point module in the access point device and a conventional station device, and is used to transmit a conventional beacon frame. Compared with the second connection, the first connection can shorten duration of receiving a beacon frame, reduce standby power consumption of the first station device, greatly save electric energy of the first station device, and prolong battery life of the first station device.

It should be understood that the low power mark carried in the first probe response indicates that a communication connection established between the first station device and the access point device is a low power connection. After the low power connection is established, the station device may receive a beacon frame of a short length to reduce time for receiving the beacon frame by the station device. This effectively reduces power consumption of the first station device in a standby process.

In embodiments of this application, the low power mark is represented as Low Power Mark, LPM for short. During an actual design, the low power mark LPM may customize a hexadecimal digit sequence based on the IEEE802.11 protocol, and a byte length and content of the low power mark LPM may be defined based on an actual application requirement. For example, a low power mark LPM field corresponding to the communication protocol may be customized as 4-byte 0xDADD2205. When data received by the first station device or the access point device carries 0xDADD2205, 0xDADD2205 indicates a low power connection. Based on different communication protocols, a field of another byte length and another content may be further set for the low power mark. This is not limited in this application.

Step 203: If the first station device receives the second probe response sent by the access point device, the first station device establishes the second connection to the access point device.

In this embodiment of this application, after the access point device sends a first probe signal and a second probe signal to the first station device, periods for sending the first probe response and the second probe response by the access point device to the first station device may be different. Therefore, the first station device receives, in a preset time period, only the second probe response sent by the access point device, and the first station device needs to establish a connection to the access point device based on the second probe response.

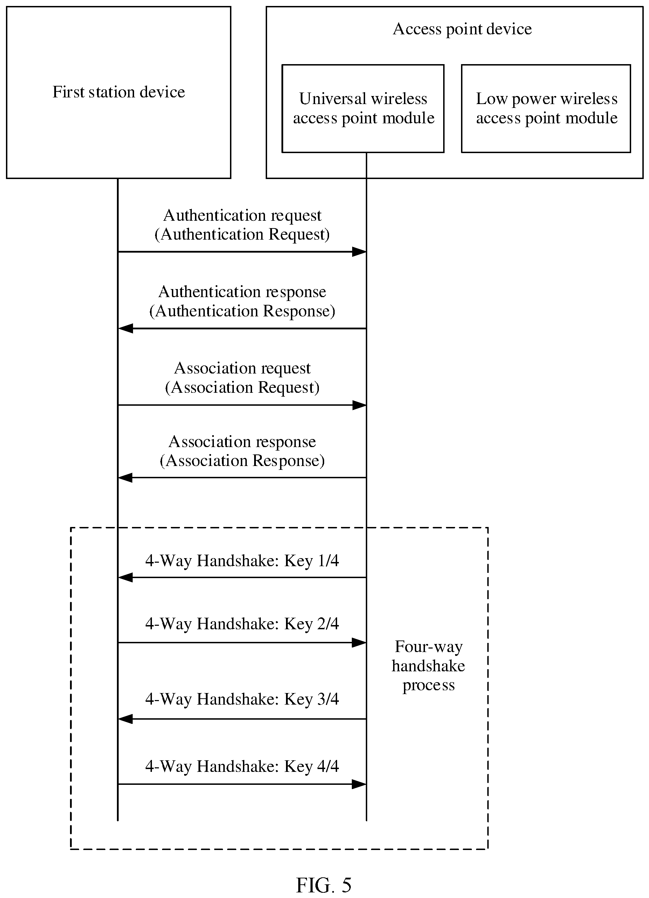

In this embodiment of this application, the second connection established by the first station device to the access point device based on the second probe response is essentially a communication connection established between the first station device and the universal wireless access point module in the access point device. It can be implemented based on different protocols and authentication modes. For example, a communication connection is performed between the first station device and the access point device in a Wi-Fi Protected Access (Wi-Fi Protected Access 2, WPA 2) authentication manner. A process in which the first station device establishes the second connection to the access point device may be shown in FIG. 5.

First, the first station device sends an authentication request Authentication Request to the universal wireless access point module of the access point device, where the authentication request Authentication Request carries the low power mark; then, the universal wireless access point module of the access point device sends an authentication response Authentication Response to the first station device based on the authentication request Authentication Request sent by the first station device; then, the first station device receives the authentication response Authentication Response sent by the universal wireless access point module of the access point device, and sends, based on the received authentication response Authentication Response, an association request Association Request of the universal wireless access point module to the access point device, where the association request Association Request carries the low power mark; the universal wireless access point module of the access point device receives the association request Association Request sent by the first station device, and sends an association response Association Response to the first station device based on the received association request Association Request; the universal wireless access point module of the access point device sends a 1^{st} handshake packet 4-Way Handshake: Key 1/4 to the first station device based on a data packet and a random number that correspond to the universal wireless access point module; the first station device receives the 1^{st} handshake packet sent by the universal wireless access point module of the access point device, and sends, to the universal wireless access point module of the access point device, a corresponding first encrypted data packet (namely, a 2^{nd} handshake packet 4-Way Handshake: Key 2/4) that is generated based on data in the 1^{st} handshake packet; after receiving the 2^{nd} handshake packet sent by the first station device, the universal wireless access point module of the access point device generates a second encrypted data packet, namely, a 3^{rd} handshake packet 4-Way Handshake: Key 3/4, based on a random number corresponding to the universal wireless access point module and data in the 2^{nd} handshake packet; and after receiving the 3^{rd} handshake packet, the first station device checks the 3^{rd} handshake packet based on the data in the 2^{nd} handshake packet that is sent to the universal wireless access point module of the access point device, and sends acknowledgement information, namely, a 4^{th} handshake packet 4-Way Handshake: Key 4/4, to the universal wireless access point module of the access point device. The second connection between the universal wireless access point module in the access point device and the first station device is completed in the foregoing process. Subsequently, the universal wireless access point module in the access point device may communicate with the first station device based on the established second connection.

It should be noted that, in the authentication request Authentication Request, the association request Association Request, the 2^{nd} handshake packet 4-Way Handshake: Key 2/4, and the 4^{th} handshake packet 4-Way Handshake: Key 4/4 sent by the first station device to the universal wireless access point module of the access point device, only the association request Association Request carries the low power mark, and is used to send, to the access point device, information such as a communication protocol, a rate, and a channel that are supported by the first station device, to complete a radio link service negotiation process between the first station device and the universal wireless access point module in the access point device. Communication connection manners (for example, a data encryption or non-encrypted transmission manner, and a mutual authentication manner) or corresponding communication protocols (for example, a sixth generation (6th generation, 6G) communication technology or another future communication technology) between the first station device and the universal wireless access point module of the access point device varies, steps in a process of establishing the second connection between the first station device and the universal wireless access point module of the access point device may be different. In the foregoing example, the steps in the process of establishing the second connection between the first station device and the universal wireless access point module of the access point device are merely examples for description. The steps in the process of establishing the second connection between the first station device and the universal wireless access point module of the access point device are not limited in this application.

Step 204: If the access point device establishes the second connection to the first station device based on the second probe response, the access point device establishes the first connection to the first station device by using a basic service set transition request.

It should be understood that the basic service set (Basic Service Set, BSS) transition request includes a media access control address (Media Access Control Address, MAC) corresponding to a low power wireless access point module in the access point device, and the MAC address can guide the first station device to associate with the access point device by establishing the first connection.

After the second connection is established between the universal wireless access point module in the access point device and the first station device, because data sent by the first station device to the access point device carries the low power mark, when the universal wireless access point module in the access point device receives the data that carries the low power mark and that is sent by the first station device, the universal wireless access point module in the access point device can identify, based on the low power mark, that the first station device is a low power device. Therefore, the access point device may send the basic service set BSS transition request to the first station device based on the second connection between the access point device and the first station device, the basic service set BSS transition request is used by the first station device to establish the first connection to the access point device, so that the universal wireless access point module guides the first station device to establish the first connection (namely, a low power connection) to the access point device by using the low power wireless access point module.

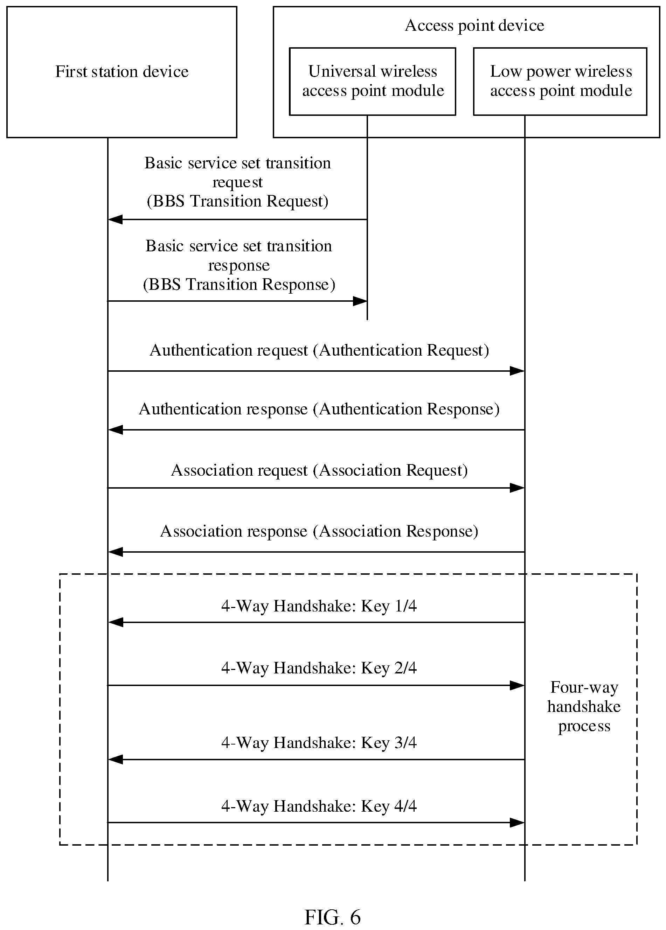

That the first station device is communicatively connected to the access point device in the WPA2 authentication manner is still used as an example. A process in which the first station device establishes the first connection to the access point device based on the basic service set transition request may be shown in FIG. 6.

After the first station device establishes the second connection to the universal wireless access point module in the access point device, the universal wireless access point module sends the basic service set BSS transition request to the first station device; after receiving the basic service set transition request BSS Transition Request sent by the universal wireless access point module, the first station device sends, to the universal wireless access point module, a basic service set transition response BSS Transition Response corresponding to the basic service set BSS transition request, and then sends, an authentication request Authentication Request to a low power wireless access point module in the access point device based on a MAC address carried in the basic service set transition request BSS Transition Request sent by the universal wireless access point module, where the authentication request Authentication Request carries the low power mark; then, the low power wireless access point module of the access point device sends an authentication response Authentication Response to the first station device based on the authentication request Authentication Request sent by the first station device; then, the first station device receives the authentication response Authentication Response sent by the low power wireless access point module of the access point device, and sends, to the access point device based on the received authentication response Authentication Response, an association request Association Request of the low power wireless access point module, where the association request Association Request carries the low power mark; the low power wireless access point module of the access point device receives the association request Association Request sent by the first station device, and sends an association response Association Response to the first station device based on the received association request Association Request; the low power wireless access point module of the access point device sends a 1^{st} handshake packet 4-Way Handshake: Key 1/4 to the first station device based on a data packet and a random number that correspond to the low power wireless access point module; the first station device receives the 1^{st} handshake packet sent by the low power wireless access point module of the access point device, and sends, to the low power wireless access point module of the access point device, a corresponding first encrypted data packet (namely, a 2^{nd} handshake packet 4-Way Handshake: Key 2/4) that is generated based on data in the 1^{st} handshake packet; after receiving the 2^{nd} handshake packet sent by the first station device, the low power wireless access point module of the access point device generates a second encrypted data packet, namely, a 3^{rd} handshake packet 4-Way Handshake: Key 3/4, based on a random number corresponding to the low power wireless access point module and data in the 2^{nd} handshake packet; and after receiving the 3^{rd} handshake packet, the first station device checks the 3^{rd} handshake packet based on the data in the 2^{nd} handshake packet sent to the low power wireless access point module of the access point device, and sends acknowledgement information, namely, a 4^{th} handshake packet 4-Way Handshake: Key 4/4, to the low power wireless access point module of the access point device. The first connection between the low power wireless access point module in the access point device and the first station device is completed in the foregoing process.

Similarly, in the basic service set transition response sent by the first station device to the universal wireless access point module of the access point device, and the authentication request Authentication Request, the association request Association Request, the 2^{nd} handshake packet 4-Way Handshake: Key 2/4, and the 4^{th} handshake packet 4-Way Handshake: Key 4/4 sent by the first station device to the low power wireless access point module of the access point device, only the association request Association Request carries the low power mark, and is used to send information such as a communication protocol, a rate, and a channel that are supported by the first station device to the access point device, to complete a radio link service negotiation process between the first station device and the universal wireless access point module in the access point device. As communication connection manners or corresponding communication protocols between the first station device and the universal wireless access point module of the access point device and between the first station device and the low power wireless access point module of the access point device are different, steps in a process of establishing the first connection between the first station device and the low power wireless access point module of the access point device may be different. In the foregoing example, the steps in the process of establishing the first connection between the first station device and the low power wireless access point module of the access point device are merely examples for description. The steps in the process of establishing the first connection between the first station device and the low power wireless access point module of the access point device are not limited in this application.

Step 205: The access point device sends a third beacon frame corresponding to the first connection, where a length of the third beacon frame is less than 130 bytes, and the third beacon frame carries the low power mark. The first station device receives, through the first connection, the third beacon frame sent by the access point device.

It should be understood that the third beacon frame may be used to keep alive the first connection between the first station device and the access point device. Compared with a conventional beacon frame, the third beacon frame provided in this embodiment of this application has a length less than 130 bytes and carries the low power mark. Therefore, duration for receiving a beacon frame by the first station device can be shortened, standby power consumption of the first station device can be reduced, electric energy of the first station device can be greatly saved, battery life of the first station device can be prolonged, a battery life capability of the first station device can be improved, and a service life of the first station device can be prolonged.

It should be noted that, in the foregoing implementation, the first station device establishes the first connection to the access point device by sending the probe request to the access point device and receiving the probe responses (including the first probe response and the second probe response) returned by the access point device. During actual application, the first station device may also establish the first connection to the access point device by receiving the beacon frames (including the conventional beacon frame sent by the universal wireless access point module and the third beacon frame sent by the low power wireless access point module) sent by the access point device. For example, if the first station device receives the conventional beacon frame sent by the universal wireless access point module in the access point device, the first station device may first establish the second connection to the universal wireless access point module in the access point device based on the conventional beacon frame, then send a basic service set transition request, and establish the first connection to the low power wireless access point module in the access point device. For another example, if the first station device receives the conventional beacon frame sent by the universal wireless access point module and the third beacon frame sent by the low power wireless access point module in the access point device, or if the first station device receives only the third beacon frame sent by the low power wireless access point module in the access point device, the first station device may directly establish, based on the received third beacon frame, the first connection to the low power wireless access point module in the access point device.

In embodiments of this application, the third beacon frame may be designed based on a format of a standard beacon frame in the 802.11 protocol. During an actual design of this solution, the third beacon frame includes only a small amount of necessary information required for establishing the first connection in the standard beacon frame. For example, the third beacon frame includes a basic service set identifier SSID field, a supported rate Support Rates field, and a traffic indication map TIM field. Fields that do not need to be set in the third beacon frame include: Unnecessary information such as a country identity code Country field, an extended rate physical layer ERP field, a transmit power control report TPC field, a Wi-Fi multimedia WMM field, a vendor Vendor field, and a Wi-Fi protected setup WPS field. In other words, the third beacon frame may be obtained after the unnecessary information in the standard beacon frame is deleted.

In this embodiment of this application, the low power mark LPM carried in the third beacon frame is located in a frame body part of the third beacon frame, and the frame body part is also referred to as a data part. A specific frame format of the third beacon frame may be set in different manners based on different communication protocols. Specific content of the third beacon frame and a setting location of the low power mark in the third beacon frame in different protocols are not limited in this application.

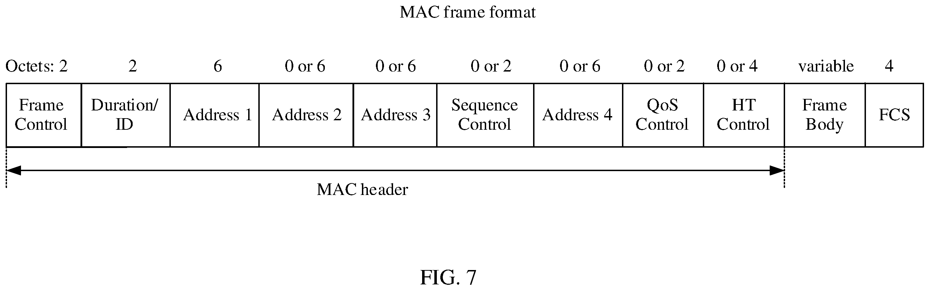

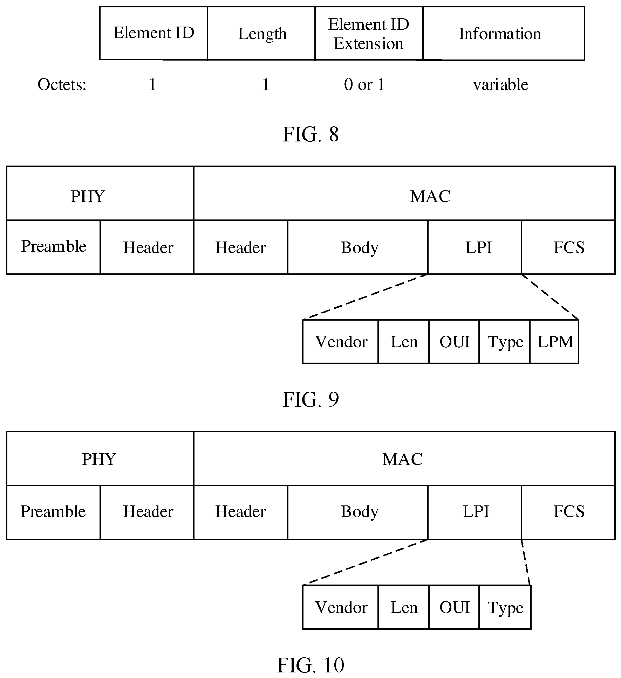

By way of example but not limitation, FIG. 7 is a diagram of a structure of a format of a MAC frame defined based on the 802.11 protocol according to an embodiment of this application. FIG. 8 is a diagram of a frame structure of a corresponding field in a frame body Frame Body defined based on the 802.11 protocol according to an embodiment of this application. As shown in FIG. 7 and FIG. 8, Octets indicate a quantity of bytes occupied by each field, where 1 byte is 8 bits; and the format of the MAC frame (namely, the third beacon frame) defined based on the 802.11 protocol sequentially includes a frame header MAC header field, a frame body Frame Body field, and a frame check sequence (Frame Check Sequence, FCS) field. The frame body Frame Body field is used to send or receive information. The FCS field is also referred to as a frame trailer, and is used for error detection. The FCS field includes a 32-bit cyclic redundancy check (CRC). To be specific, a value stored in the field is a check value of all data before the FCS field in the MAC frame. During transmission of the MAC frame, after a destination node receives the MAC frame, a check value of all the data before the FCS field in the MAC frame is calculated again. If a calculated check value is different from the received check value, it is considered that there is an exception during the transmission of the MAC frame, and the destination node selects to discard the MAC frame. On the contrary, if the check value is the same as the received check value, the MAC frame is received.

It should be understood that the frame header MAC header sequentially includes: a frame control Frame Control field, a duration Duration ID field, an address Address 1 field, an address Address 2 field, an address Address 3 field, a sequence control Sequence Control field, an address Address 4 field, a quality of service (Quality of Service, QoS) control field, and a high-throughput (High-throughput, HT) control field. The Frame Control field indicates a version, a frame type, a direction of a data frame, a frame bit of a retransmitted frame, whether to enter a power saving mode, and the like of the MAC frame. The Duration ID field indicates time during which the MAC frame and an acknowledgement frame of the MAC frame occupy a channel. The Address field indicates a receiver, a sender, a destination MAC address, and a source MAC address of a data frame. The Sequence Control field is used to filter out a repeated frame. The QoS control field is used to identify information such as a traffic class (TC) or a traffic stream (TS) to which the MAC frame belongs. The HT control field indicates that the MAC frame is a high-throughput frame.

As shown in FIG. 8, based on the 802.11 protocol, fields that may be customized in the frame body Frame Body field of the MAC frame sequentially include an element identifier Element ID field, a length Length field, an element identifier extension Element ID Extension field, and an element information Information field, where the Information field can be customized based on actual application.

FIG. 9 is a diagram of a packet structure defined based on the 802.11 protocol according to an embodiment of this application. As shown in FIG. 9, the packet structure defined based on the 802.11 protocol is applied to a MAC layer and a PHY layer. The PHY layer corresponds to a PHY frame, and the PHY frame includes a preamble Preamble field and a header Header field. A frame synchronization field and a frame start identifier field may be set in the Preamble field. A signal field, a service field, a length field, and a check field used to store a check value of data in the Header field may be set in the Header field. The PHY frame is located before the MAC frame, and is used to receive and send a data frame.

The MAC layer corresponds to the MAC frame. In this embodiment of this application, the frame body Frame Body field in the MAC frame is customized as a low power information (Low Power Information, LPI) field, and may sequentially include a vendor Vendor field, a length Len field, an organizationally unique identifier (Organizationally unique identifier, OUI) field, a type Type field, and a low power LPM field. The Vendor field is used to identify different vendors. In this embodiment of this application, the Vendor field may be customized to 0xDD. The Len field indicates a quantity of bytes in a 1^{st} byte to a last field after the Len field in the LPI field. The OUI field may indicate a plurality of OUIs defined by a vendor, and each OUI corresponds to a specific vendor. During actual application, one vendor usually has a plurality of extended customized Information fields. To distinguish between customized field types of vendors, the type Type field is added in this embodiment of this application. The LPM field is used by the first station device and the access point device to identify each other, and the first station device and the access point device establish a corresponding communication connection based on the LPM field. In addition, the LPM field may be further used to check consistency with the type Type field. To be specific, data carried in the type Type field and data carried in the low power LPM field have a same function in the MAC frame. In this embodiment of this application, the LPM field may be customized as 0xDADD2205.

It should be noted that, because the LPM field may be further used to check consistency with the type Type field, FIG. 10 is a diagram of another structure of a packet defined based on the 802.11 protocol according to an embodiment of this application. As shown in FIG. 10, the LPI field may further include a vendor Vendor field, a length Len field, an organizationally unique identifier (Organizationally unique identifier, OUI) field, and a type Type field. A difference between the packet structure shown in FIG. 10 and the packet structure shown in FIG. 9 lies in that the LPI field in the packet structure shown in FIG. 10 may not include the low power LPM field. Such a setting manner can reduce a byte length of the third beacon frame received by the first station device, and further reduce time for receiving the third beacon frame by the first station device, to reduce standby power consumption of the first station device.

During actual application, after the access point device sends the third beacon frame to the first station device, the first station device may receive, based on the foregoing wireless access method 200, the third beacon frame sent by the access point device.

When the first station device has no data exchange with the access point device, the first station device enters a sleep state, and the first station device switches from the sleep state to a wake-up state at an interval of first preset time, and receives the third beacon frame sent by the access point device. An interval time for sending the third beacon frame by the access point device to the station device may be set based on actual application, and the first preset time may correspond to or may not correspond to the interval time for sending the beacon frame to the station device. The interval time for sending the third beacon frame by the access point device and the first preset time are not limited in this application.

It should be noted that the interval of the first preset time at which the first station device switches from the sleep state to the wake-up state is an integer multiple of the corresponding time interval at which the access point device sends the beacon frame to the first station device, to ensure that the first station device can receive the third beacon frame sent by the access point device. For example, assuming that a corresponding time interval for periodically sending a beacon frame by the access point device to the first station device is 102.4 ms, the interval of the first preset time at which the first station device switches from the sleep state to the wake-up state may be set to 1024 ms.

During actual application, because periods for sending the first probe response and the second probe response by the access point device to the first station device may be different, after the access point device sends the first probe signal and the second probe signal to the first station device, the probe response received by the first station device may have the following several cases: In a case, the first station device receives only the second probe response sent by the access point device. Refer to the foregoing embodiment. In another case, the first station device receives the first probe response and the second probe response that are sent by the access point device. In still another case, the first station device receives only the first probe response sent by the access point device.

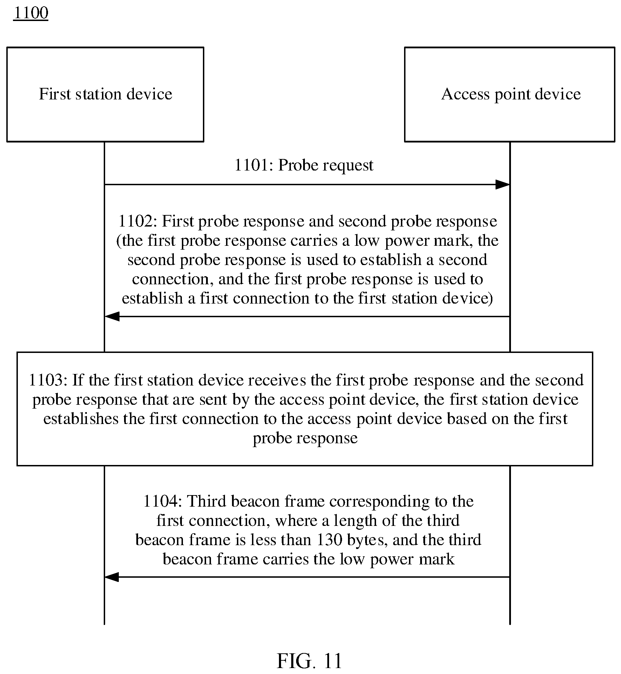

Therefore, for the case in which the first station device receives the first probe response and the second probe response that are sent by the access point device, in some possible embodiments, FIG. 11 is a flowchart of an embodiment of another wireless access method according to this application. As shown in FIG. 11, a wireless access method 1100 includes the following steps.

Step 1101: A first station device sends a probe request to an access point device, and the access point device receives the probe request sent by the first station device.

Step 1102: The access point device sends a first probe response and a second probe response to the first station device, where the first probe response carries a low power mark, the second probe response is used to establish a second connection to the first station device, and the first probe response is used to establish a first connection to the first station device.

Step 1103: If the first station device receives the first probe response and the second probe response that are sent by the access point device, the first station device establishes the first connection to the access point device based on the first probe response.

In the foregoing embodiment, after the first station device receives the first probe response and the second probe response, because the first probe response carries the low power mark and is used to establish the first connection to the access point device, to reduce power consumption of the first station device, the first probe response may be identified based on the low power mark, the first connection is established based on the first probe response. For a specific process of establishing the first connection, refer to the process of establishing the first connection between the first station device and the low power wireless access point module in the access point device shown in FIG. 6. Details are not described herein again.

**In** a possible implementation, sending first connection information corresponding to the first probe response to the access point device based on the low power mark may include: displaying a first wireless access icon corresponding to the first probe response and a second wireless access icon corresponding to the second probe response, where the first wireless access icon includes a low power icon corresponding to the low power mark; and establishing the first connection to the access point device in response to a selection operation performed by a user on the first wireless access icon.

It should be understood that the first wireless access icon and the second wireless access icon are used to distinguish between the first probe response and the second probe response that are sent by the access point device to the first station device. **In** addition to the first wireless access icon corresponding to the first probe response and the second wireless access icon corresponding to the second probe response that are displayed on the first station device, a first name (for example, AP 1) corresponding to the first probe response and a second name (for example, AP 2) corresponding to the second probe response may be separately displayed on the first station device. Specific display manners, display locations, and display content of the first probe response and the second probe response are not limited in this application.

The selection operation performed by the user on the first wireless access icon may be triggered according to a voice instruction, an air gesture instruction, a touch instruction, a physical button instruction, or the like.

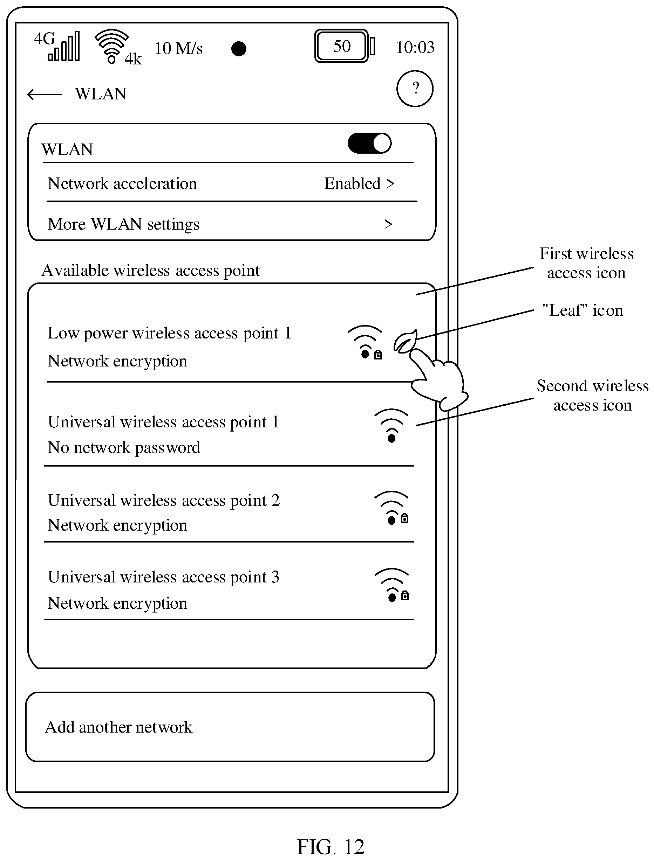

By way of example but not limitation, a mobile phone is still used as the first station device, FIG. 12 is a diagram of a scenario in which a first connection is established to an access point device according to an embodiment of this application. As shown in FIG. 12, when the first station device receives a first probe response and a second probe response that are sent by the access point device, a first wireless access icon corresponding to the first probe response and a second wireless access icon corresponding to the second probe response that are shown in FIG. 12 may be displayed on a home screen of the mobile phone. It is assumed that the first wireless access icon includes a "leaf" icon in FIG. 12, and the "leaf" icon indicates a low power mark. A user may trigger a first connection process between the first station device and the access point device by performing a selection operation on the "leaf" icon, to establish the first connection between the first station device and the access point device.

It should be noted that the first station device may actively identify the low power mark carried in the first probe response, and directly trigger the first connection process between the first station device and the access point device, to establish the first connection between the first station device and the access point device.

Alternatively, after the first station device receives the first probe response and the second probe response that are sent by the access point device, if the first wireless access icon (or a name) corresponding to the first probe response and the second wireless access icon (or a name) corresponding to the second probe response that are displayed on the first station device are the same, the first station device triggers, in an automatic or a manual manner, the first connection process between the first station device and the access point device by identifying the low power mark carried in the first probe response, to establish the first connection between the first station device and the access point device.

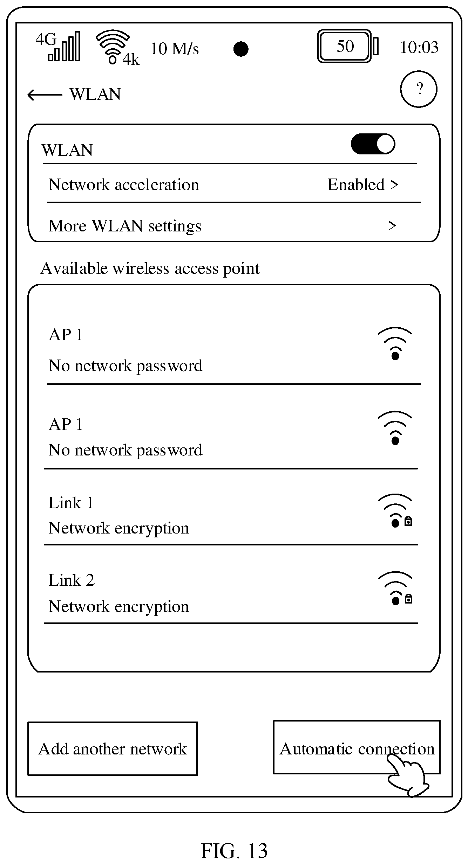

For example, FIG. 13 is a diagram of another scenario in which first connection information is sent to an access point device according to an embodiment of this application. As shown in FIG. 13, it is assumed that the first station device is still a mobile phone. After the mobile phone receives a first probe response and a second probe response that are sent by the access point device, a first wireless access icon (for example, a wireless icon in FIG. 13) and/or a name (for example, an AP 1 in FIG. 13) corresponding to the first probe response and a second wireless access icon and/or a name corresponding to the second probe response that are displayed on a home screen of the mobile phone are the same, and the first wireless access icon and/or the name corresponding to the first probe response cannot be identified by using the wireless access icon and the name. In this case, a user may tap an "automatic connection" icon to trigger the mobile phone to identify the first probe response that carries a low power mark, and trigger a first connection process between the mobile phone and the access point device, to establish a first connection between the first station device and the access point device.

Step 1104: The access point device sends a third beacon frame corresponding to the first connection to the first station device, where a length of the third beacon frame is less than 130 bytes, and the third beacon frame carries the low power mark.

After the access point device sends the third beacon frame to the first station device, the first station device may receive, based on the foregoing wireless access method 1100, the third beacon frame sent by the access point device.

Steps 1101 to 1104 may be understood with reference to steps 201 to 205 in the foregoing embodiment, and only differences are described herein. In this embodiment of this application, a difference from the embodiment shown in FIG. 2 mainly lies in that after the access point device sends the first probe response and the second probe response to the first station device, the first station device receives different probe responses. In this embodiment, the first station device receives both the first probe response and the second probe response that are sent by the access point device.

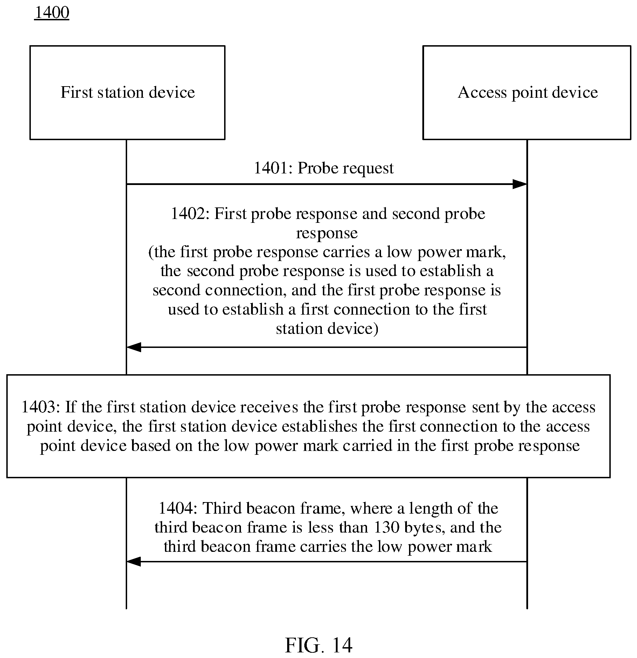

Based on the foregoing two embodiments, it is not difficult to figure out that after the access point device sends the first probe response and the second probe response to the first station device, the first station device may receive only the first probe response in the probe responses. In this case, for a case in which the first station device receives only the first probe response sent by the access point device, in some embodiments, FIG. 14 is a flowchart of an embodiment of another wireless access method according to an embodiment of this application. As shown in FIG. 14, a wireless access method 1400 includes the following steps.

Step 1401: A first station device sends a probe request to an access point device, and the access point device receives the probe request sent by the first station device.

Step 1402: The access point device sends a first probe response and a second probe response to the first station device, where the first probe response carries a low power mark, the second probe response is used to establish a second connection to the first station device, and the first probe response is used to establish a first connection to the first station device.

Step 1403: If the first station device receives the first probe response sent by the access point device, the first station device establishes the first connection to the access point device based on the low power mark carried in the first probe response.

In this embodiment, after the first station device receives the first probe response, because the first probe response carries the low power mark, the first station device may identify the first probe response based on the low power mark, and establish the first connection to the access point device based on the first probe response. Specifically, for a process of establishing the first connection, refer to the process of establishing the first connection between the first station device and the low power wireless access point module in the access point device shown in FIG. 6. Details are not described herein again.

Step 1404: The access point device sends a third beacon frame to the first station device, where a length of the third beacon frame is less than 130 bytes, and the third beacon frame carries the low power mark.

Steps 1401 to 1404 may be understood with reference to steps 201 to 205 in the foregoing embodiment, and only differences are described herein. In this embodiment of this application, a difference from the embodiment shown in FIG. 2 mainly lies in that after the access point device sends the first probe response and the second probe response to the first station device, the first station device receives different probe responses. In this embodiment, the first station device receives only the first probe response sent by the access point device.

Through experimental simulation, it takes 3 ms (millisecond) to 4 ms for the first station device to normally receive a conventional beacon frame sent by the access point device. However, after the wireless access method 200 in the foregoing embodiment of this application is used, it takes less than 1 ms for the first station device to receive the third beacon frame sent by the access point device. In addition, average power consumption of the first station device in a standby state is reduced by about 20%. It can be learned from the foregoing experiment result that the wireless access method provided in this application can effectively reduce standby power consumption of the first station device.

According to the wireless access method provided in this embodiment of this application, the access point device sends the third beacon frame whose byte length is less than 130 bytes. Compared with a conventional beacon frame (namely, a beacon frame whose byte length is greater than 130 bytes) received by the station device, the third beacon frame with a small quantity of bytes received by the station device can shorten time for receiving the beacon frame by the station device, to reduce power consumption of receiving the beacon frame by the station device. Especially for a station device powered by a battery, according to the wireless access method provided in this embodiment of this application, battery life of the station device can be effectively prolonged, a battery life capability of the station device is improved, and a service life of the station device is prolonged.

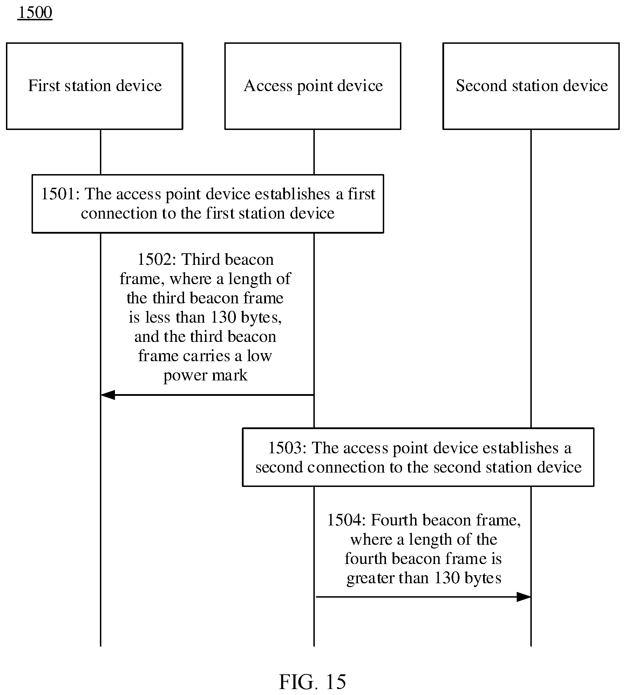

After the first connection is established between the first station device and the access point device, in some other embodiments, the access point device may further establish the second connection to a second station device by using a universal wireless access point module, and the second station device may be a terminal device like a mobile phone, a personal digital assistant, a tablet computer, a vehicle-mounted computer, a laptop computer, a smart screen, an ultra-mobile personal computer, or a wearable device. FIG. 15 is a schematic flowchart of still another wireless access method according to an embodiment of this application. As shown in FIG. 15, a wireless access method 1500 includes the following steps.

Step 1501: An access point device establishes a first connection to a first station device.

Step 1502: The access point device sends a third beacon frame, where a length of the third beacon frame is less than 130 bytes, and the third beacon frame carries a low power mark.

It should be understood that steps 1501 and 1502 may be understood with reference to the wireless access method 200 in steps 201 to 205, the wireless access method 1100 in steps 1101 to 1104, and the wireless access method 1200 in steps 1201 to 1204 in the foregoing embodiment. Details are not described herein again.

Step 1503: The access point device establishes a second connection to a second station device.

It should be understood that, for understanding of a process in which the access point device establishes the second connection to the second station device in step 1503, refer to the process in which the first station device establishes the second connection to the access point device shown in FIG. 5. Details are not described herein again.

Step 1504: The access point device sends a fourth beacon frame, where a length of the fourth beacon frame is greater than 130 bytes.

It should be understood that the fourth beacon frame is a conventional beacon frame sent by a universal wireless access point module in the access point device. The second station device can implement a wireless network access service by receiving the fourth beacon frame sent by the universal wireless access point module in the access point device.

The following describes an example of a manner in which the station device intercepts and receives a beacon frame whose length corresponds to low power information from the beacon frame sent by the access point device.

As shown in FIG. 1, in this embodiment, the access point device may include only one wireless access point module. The wireless access point module can provide a beacon frame that carries the low power information, where the low power information is used by the station device to determine a receiving length of the beacon frame. The wireless access point module is configured to provide a wireless network access service for a low power station device. The low power device may be a station device that uses a battery to provide electric energy.

In this embodiment of this application, a process of generating the beacon frame may be the following: obtaining a preset frame format and low power information; adding the low power information after a traffic indication map TIM field in the preset frame format, to obtain a first target frame format; and generating the beacon frame based on the first target frame format and to-be-carried data.

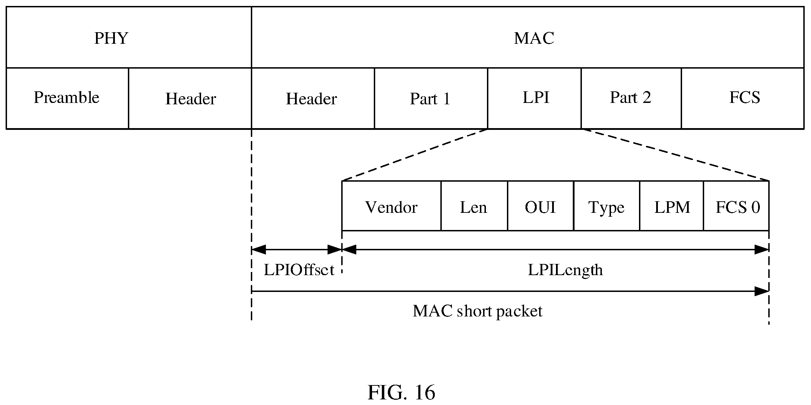

By way of example but not limitation, it is assumed that the beacon frame is a beacon frame based on the 802.11 protocol, and the preset frame format may be a frame format of the MAC frame as shown in FIG. 7 to FIG. 9. FIG. 16 is a diagram of a structure of a first target frame format according to an embodiment of this application. As shown in FIG. 16, the low power information is low power information LPI. During actual application, for specific frame format content in the beacon frame, refer to the third beacon frame shown in FIG. 7 to FIG. 9 for understanding. Only a difference is described herein. Refer to the third beacon frame (namely, the MAC frame) shown in FIG. 7 to FIG. 9, and the low power information LPI may sequentially include a vendor Vendor field, a length Len field, an organizationally unique identifier OUI field, a type Type field, and/or a low power LPM field. However, in this embodiment, a first check field FCS 0 is further added to the low power information (namely, the low power information LPI), and the first check field FCS 0 is used to store a check value of data carried from a frame header of a beacon frame to the first check field FCS 0 (excluding the first check field FCS 0). In this way, an error detection function in a data transmission process between the station device and the access point device is implemented. After the low power information is added to the traffic indication map TIM field in the preset frame format, the first target frame format shown in FIG. 16 can be obtained, and the beacon frame is generated based on the first target frame format and to-be-carried data.

During actual application, data carried in the first check field FCS 0 may be calculated, from data carried from a frame header to a field before the first check field FCS 0, by a software design or by adding a check module (for example, a CRC check module 2) to obtain a check value corresponding to the first check field FCS 0.

It should be noted that, in this embodiment, the beacon frame carries the low power information, and the low power mark included in the low power information may be the same as or different from the low power mark carried in the third beacon frame in the wireless access method 200. A specific design may be set based on actual application, and specific content of the low power mark in the low power information in the beacon frame sent by the access point device is not limited in this application.

To improve flexibility of a location at which the low power information is set in the beacon frame, in another embodiment, a process of generating the beacon frame may alternatively be the following: obtaining a preset frame format and low power information; adding the low power information to a frame body part of the preset frame format, to obtain a second target frame format; and generating the beacon frame based on the second target frame format and to-be-carried data.

It should be noted that the adding the low power information to a frame body part of the preset frame format includes: adding the low power information after a traffic indication map TIM field in the preset frame format, or adding the low power information before a traffic indication map TIM field in the preset frame format. In this implementation, the location at which the low power information is set in the frame body part is not limited. In an actual design process, when the low power information is added before the traffic indication map TIM field in the preset frame format, time for receiving and parsing the traffic indication map TIM field in the beacon frame by the station device can be effectively reduced, and time for receiving the beacon frame by the station device can be further shortened. Therefore, power consumption of receiving the beacon frame by the station device is reduced.

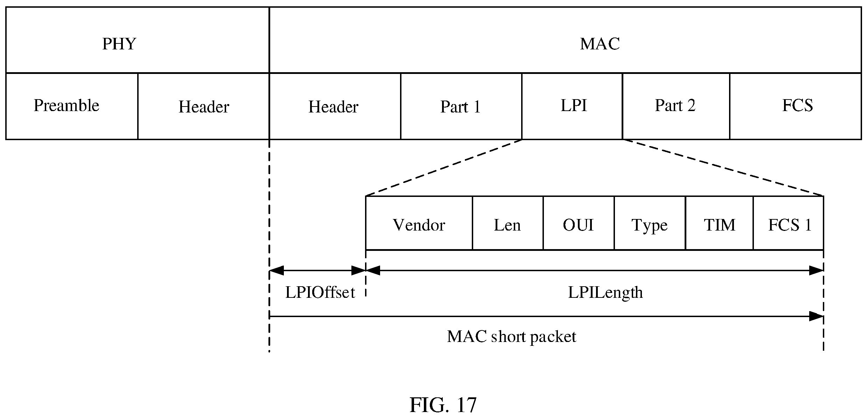

For example, it is assumed that the beacon frame is still a beacon frame based on the 802.11 protocol, the preset frame format is still the frame format of the MAC frame in FIG. 7 and FIG. 8, and the low power information is low power information LPI. The low power information LPI is added to a frame body part of the preset frame format, the second target frame format shown in FIG. 17 to FIG. 19 may be formed, and the beacon frame may be generated based on the second target frame format and the to-be-carried data. For specific frame format content in the beacon frame, refer to the third beacon frame shown in FIG. 7 to FIG. 9 for understanding. The following describes only a difference.

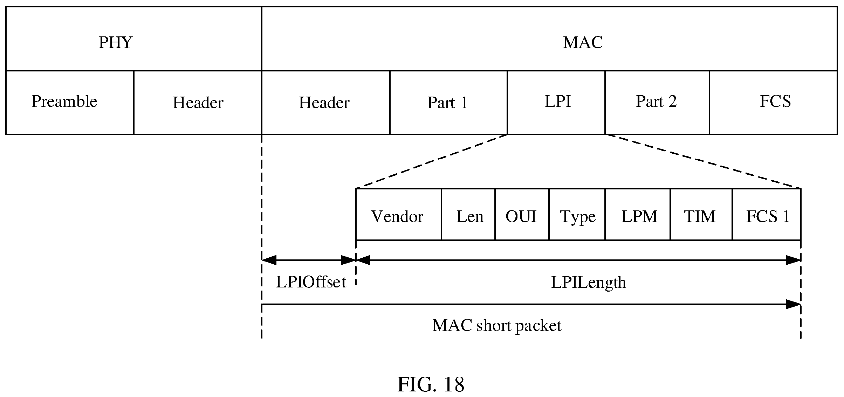

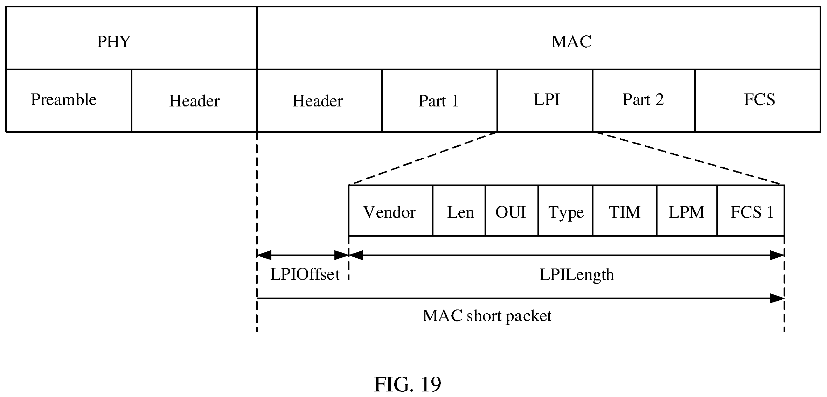

In this embodiment, the low power information (namely, low power information LPI) may include a vendor Vendor field, a length Len field, an organizationally unique identifier OUI field, a type Type field, a traffic indication map TIM field, and a second check field FCS 1 shown in FIG. 17, or may include a vendor Vendor field, a length Len field, an organizationally unique identifier OUI field, a type Type field, a traffic indication map TIM field, a low power LPM field, and a second check field FCS 1 that are shown in FIG. 18 or FIG. 19. The traffic indication map TIM field is located before the second check field FCS 1, and the second check field FCS 1 is used to carry a check value of data carried from a 1^{st} field in the low power information (namely, low power information LPI) to a previous field of the second check field FCS 1, namely, a check value of data carried from the vendor Vendor field to the traffic indication map TIM field in FIG. 17 and FIG. 18 in the embodiments of this application, and a check value of data carried from the vendor Vendor field to the low power LPM field in FIG. 19, to implement an error detection function in a data transmission process between the station device and the access point device.

The type Type field and the low power LPM field have the same meanings as the low power LPM field in the third beacon frame shown in FIG. 7 to FIG. 9, and may be used to check consistency with the type Type field. Therefore, in a design process of the beacon frame, based on an actual application requirement, a setting of the low power LPM field in the low power information is added or reduced. This is not limited in this application.

After the beacon frame is generated, the access point device may periodically send, to the station device, the beacon frame that carries the low power information.

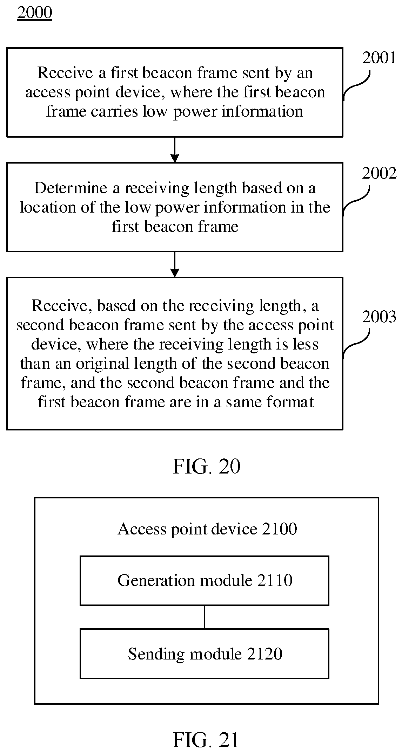

Based on the beacon frame periodically sent by the access point device, FIG. 20 is a flowchart of still another embodiment of a wireless access method according to an embodiment of this application. As shown in FIG. 20, a wireless access method 2000 corresponding to the foregoing access point device is applied to a station device, and includes the following steps 2001 to 2003.

Step 2001: Receive a first beacon frame sent by the access point device, where the first beacon frame carries low power information.

It should be understood that the first beacon frame may be a 1^{st} beacon frame that is sent by the access point device and that is received by the station device after the station device establishes a connection to the access point device. The connection established between the station device and the access point device may be a connection that is re-established after the station device is disconnected from the access point device, or may be a 1^{st} communication connection established between the station device and the access point device.

Optionally, the first beacon frame may alternatively be a beacon frame that is sent by the access point device and that is received by the station device a preset quantity of times. For example, it is assumed that, based on an actual application requirement, after the station device is upgraded, a beacon frame sent by the access point device needs to be received twice, and the station device may establish a communication connection to the access point device. In this case, the first beacon frame may be a beacon frame that is sent by the station device and that is received by the station device for the third time after the station device is upgraded.

Optionally, if the first beacon frame received by the station device within a preset quantity of times carries low power information and has a same frame format, it may be determined that the beacon frame received for the last time in the preset quantity of times is the first beacon frame. Alternatively, if a 1^{st} beacon frame received after a preset quantity of times and the first beacon frame received by the station device within the preset quantity of times both carry low power information and have a same frame format, it may be determined that the 1^{st} beacon frame received after the preset quantity of times is the first beacon frame.

For example, it is assumed that the preset quantity of times is set to 2 when the station device performs system upgrade. If the first beacon frame received by the station device two consecutive times meets a condition that the first beacon frames carry low power information and have a same frame format, the beacon frame that is sent by the station device and that is received for the second time may be determined as the first beacon frame. Alternatively, if the first beacon frame received by the station device two consecutive times meets a condition that the first beacon frames carry low power information and have a same frame format, and a first beacon frame received for the third time and the first beacon frame received two consecutive times also meet a condition that the low power information is carried and frame formats are the same, the beacon frame that is sent by the station device and that is received for the third time may be determined as the first beacon frame.

Based on the foregoing implementation, a case in which power consumption of the station device increases because the station device is frequently woken up because the station device receives the beacon frame in different frame formats can be avoided, accuracy of receiving the beacon frame by the station device can be improved, standby power consumption of the station device can be effectively reduced, and battery life of the station device can be prolonged.

Step 2002: Determine a receiving length based on a location of the low power information in the first beacon frame.

In this embodiment of this application, the receiving length is a sum of an offset of the low power information in the first beacon frame and a length value of the low power information. As shown in FIG. 16 to FIG. 19, the offset of the low power information in the first beacon frame is LPIOffset, and indicates a quantity of bytes from a frame header Header to low power information LPI in a MAC frame. The length value of the low power information is LPILength in FIG. 16 to FIG. 19, and indicates a total quantity of bytes from a first field to a last field in the low power information LPI.

Step 2003: Receive, based on the receiving length, a second beacon frame sent by the access point device, where the receiving length is less than an original length of the second beacon frame, and the second beacon frame and the first beacon frame are in a same format.

It should be understood that the second beacon frame is a beacon frame received by the station device after the station device receives the first beacon frame. That is, time at which the station device receives the first beacon frame is earlier than time at which the station device receives the second beacon frame, or the access point device first sends the first beacon frame to the station device and then sends the second beacon frame.

During actual application, a specific process in which the station device receives, based on the receiving length, the second beacon frame sent by the access point device is as follows: After receiving the first beacon frame, the station device determines, based on the location that is of the low power information carried in the first beacon frame and that is in the first beacon frame, the sum of the offset of the low power information in the first beacon frame and the length of the low power information, namely, the receiving length, and a specific value of the receiving length is written into a physical register (which may be a low power register) of the station device. When receiving the second beacon frame sent by the access point device, the station device receives, based on the receiving length, the second beacon frame sent by the access point device. In this case, a length of the second beacon frame actually received by the station device is less than an original length of the second beacon frame sent by the access point device.

It should be noted that, as shown in FIG. 7, the MAC frame format based on the 802.11 protocol includes a frame header MAC header, a frame body Frame Body field, and a frame trailer FCS field, which form a complete beacon frame. In this embodiment, the low power information is set in the frame body Frame Body field, and the low power information carried in the beacon frame further includes the first check field FCS 0. A complete beacon frame can be formed basically according to the foregoing embodiment. Therefore, the station device can receive data corresponding to the receiving length as a received beacon frame.

Based on the foregoing example, when an intelligent lock receives the first beacon frame sent by a router, because the first beacon frame carries the low power information, an offset LPIOffset of the low power information in the first beacon frame and a length value LPILength of the low power information are extracted and stored based on location information of the low power information in the first beacon frame, and the offset LPIOffset and the length value LPILength are written into a low power register added in the intelligent lock. When there is no data exchange between the router and the intelligent lock, the intelligent lock enters a sleep state, and then the intelligent lock switches from the sleep state to a wake-up state at a preset interval, and receives the second beacon frame sent by the router.

When receiving the second beacon frame sent by the router, the intelligent lock performs the following method: First, based on the offset LPIOffset and the length value LPILength that are stored in the low power register of the intelligent lock, starting from a frame header of a received MAC frame, first reading data carried in a field of an offset LPIOffset length, then, continuing to read data carried in a field corresponding to the length value LPILength, to form the second beacon frame to be received by the intelligent lock, and then receiving the second beacon frame corresponding to the sum of the offset LPIOffset and the length value LPILength.

Optionally, when the station device receives the beacon frame sent by the access point device, a check value stored in the first check field in the beacon frame received by the station device each time is different.

Optionally, when the access point device has no data exchange with the station device, the station device enters a sleep state; and the station device switches from the sleep state to a wake-up state at an interval of second preset time, and receives the beacon frame sent by the access point device. An interval time for sending the beacon frame by the access point device to the station device may be set based on actual application, and the second preset time may correspond to or may not correspond to the interval time for sending the beacon frame to the station device. The interval time for sending the beacon frame by the access point device and the second preset time are not limited in this application.

Optionally, the second preset time is an integer multiple of corresponding time at which the access point device sends the beacon frame to the station device.

For a process in which the access point device establishes the connection to the station device in steps 2001 to 2003, refer to steps 1501 to 1504 in the foregoing embodiment for understanding. Details are not described herein again.

Through experimental simulation, it takes 3 ms to 4 ms for the station device to normally receive a conventional beacon frame sent by the access point device. However, after the wireless access method 2000 in the foregoing embodiment of this application is used, it takes less than 1 ms for the station device to receive the beacon frame sent by the access point device. In addition, power consumption of the station device in a standby state is reduced by more than 80%. It can be learned that the wireless access method 2000 provided in this application can effectively reduce standby power consumption of the station device.

According to the wireless access method 2000 provided in this embodiment of this application, when receiving the beacon frame sent by the access point device, the station device determines, based on the location of the low power information in the received first beacon frame, the receiving length for receiving the second beacon frame by the station device, and further receives, based on the receiving length, the second beacon frame sent by the access point device. In this way, the receiving length of the second beacon frame received by the station device is less than an original length of the second beacon frame. This effectively reduces time for receiving the second beacon frame by the station device, and reduces power consumption of receiving the second beacon frame by the station device. Especially for a station device powered by a battery, battery life of the station device can be effectively prolonged, a battery life capability of the station device is improved, and a service life of the station device is prolonged.

It should be understood that sequence numbers of the steps in the foregoing embodiments do not mean an execution order. The execution order of processes should be determined based on functions and internal logic of the processes, and should not constitute any limitation on implementation processes of embodiments of this application.

FIG. 21 is a block diagram of an access point device 2100 according to an embodiment of this application. The access point device 2100 shown in FIG. 21 includes a generation module 2110 and a sending module 2120.

The generation module 2110 is configured to generate a beacon frame.

The sending module 2120 is configured to send the beacon frame to a station device, where the beacon frame carries low power information, and the low power information is used by the station device to determine a receiving length of the beacon frame.

Optionally, the generation module 2110 is further configured to:
obtain a preset frame format and the low power information;
add the low power information after a traffic indication map TIM field in the preset frame format, to obtain a target frame format; and
generate the beacon frame based on the target frame format and to-be-carried data.

Optionally, the low power information includes a first check field, and the first check field is used to carry a check value of data carried from a frame header of the beacon frame to a previous field of the first check field.

Optionally, the generation module 2110 is further configured to: obtain a preset frame format and the low power information;
add the low power information to a frame body part of the preset frame format, to obtain a second target frame format; and
generate the beacon frame based on the second target frame format and to-be-carried data.

Optionally, the low power information includes a traffic indication map TIM field and a second check field, where the traffic indication map TIM field is located before the second check field, and the second check field is used to carry a check value of data carried from a 1^{st} field to a previous field of the second check field in the low power information.

Optionally, the receiving length is a sum of an offset of the low power information in the beacon frame and a length value of the low power information.

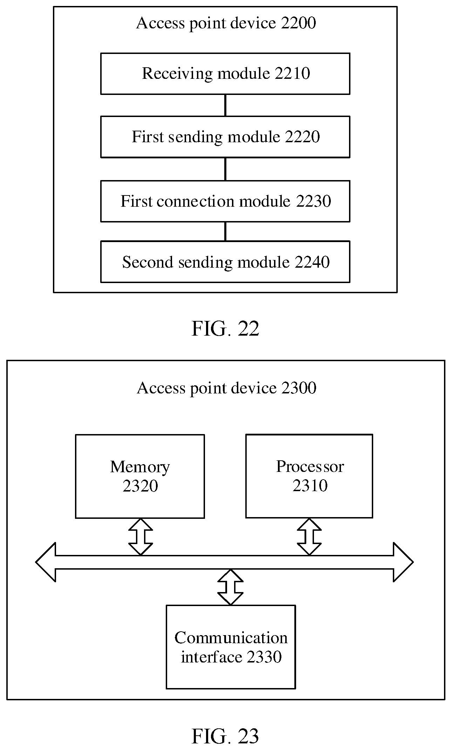

FIG. 22 is a block diagram of another access point device 2200 according to an embodiment of this application. The access point device 2200 shown in FIG. 22 includes a receiving module 2210, a first sending module 2220, a first connection module 2230, and a second sending module 2240.

The receiving module 2210 is configured to receive a probe request sent by a first station device, where the probe request carries a low power mark.

The first sending module 2220 is configured to send a first probe response and a second probe response to the first station device, where the first probe response carries the low power mark, the first probe response is used to establish a first connection to the first station device, and the second probe response is used to establish a second connection to the first station device.

The first connection module 2230 is configured to: if the access point device establishes the second connection to the first station device based on the second probe response, establish the first connection to the first station device by using a basic service set transition request.

The second sending module 2240 is configured to send a third beacon frame corresponding to the first connection, where a length of the third beacon frame is less than 130 bytes, and the third beacon frame carries the low power mark.

Optionally, the low power mark is located in a frame body part of the third beacon frame.

Optionally, the access point device further includes:
a second connection module, configured to establish a second connection to a second station device; and
a third sending module, configured to send a fourth beacon frame corresponding to the second connection, where a length of the fourth beacon frame is greater than 130 bytes.

FIG. 23 is a diagram of a structure of an access point device 2300 according to an embodiment of this application. As shown in FIG. 23, the access point device 2300 includes a processor 2310, a memory 2320, and a communication interface 2330. The memory 2320 stores instructions. The processor 2310 is configured to execute the instructions in the memory 2320. When the instructions are executed, the processor 2310 is configured to perform the method provided in any one of the foregoing method embodiments. The processor 2310 is further configured to control the communication interface 2330 to communicate with the outside.

Further, the processor 2310, the memory 2320, and the communication interface 2330 may communicate with each other through an internal connection path, to transfer a control signal and/or a data signal.

Further, the memory 2320 may be integrated into the processor 2310, or may be disposed separately from the processor 2310.

Specifically, the access point device 2300 may be configured to perform the steps performed by the access point device 2300 in the wireless access methods in FIG. 2, FIG. 11, FIG. 14, FIG. 15, and FIG. 20. The access point device 2300 may include modules that are in FIG. 21 and FIG. 22 and that are configured to perform the foregoing wireless access method. In addition, the modules in the access point device 2300 and the foregoing other operations and/or functions are used to implement corresponding procedures performed by the access point device 2300 in the wireless access methods in FIG. 2, FIG. 11, FIG. 14, FIG. 15, and FIG. 20. A specific process of performing the foregoing corresponding steps by the modules has been described in detail in the methods. For brevity, details are not described herein again.

It should be understood that, the processor in embodiments of this application may be a central processing unit (Central Processing Unit, CPU), or may be another general purpose processor, a digital signal processor (digital signal processor, DSP), an application-specific integrated circuit (application specific integrated circuit, ASIC), a field programmable gate array (field-programmable gate array, FPGA), or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

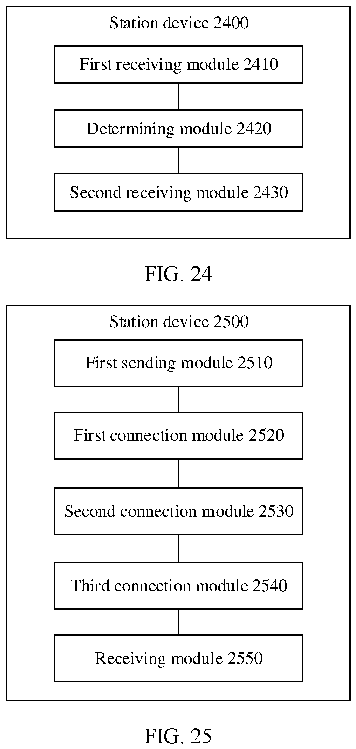

FIG. 24 is a block diagram of a station device 2400 according to an embodiment of this application. The station device 2400 shown in FIG. 24 includes a first receiving module 2410, a determining module 2420, and a second receiving module 2430.

The first receiving module 2410 is configured to receive a first beacon frame sent by an access point device, where the first beacon frame carries low power information.

The determining module 2420 is configured to determine a receiving length based on a location of the low power information in the first beacon frame.

The second receiving module 2430 is configured to receive, based on the receiving length, a second beacon frame sent by the access point device, where the receiving length is less than an original length of the second beacon frame, and the second beacon frame and the first beacon frame are in a same format.

Optionally, the first beacon frame is a beacon frame that is first sent by the access point device and that is received by the station device after the station device establishes a connection to the access point device, and the second beacon frame is a beacon frame received by the station device after the station device receives the first beacon frame.

Optionally, the receiving length is a sum of an offset of the low power information in the first beacon frame and a length value of the low power information.

Optionally, the method further includes: a register module, configured to store the offset and the length value in a preset register.

Optionally, the low power information is located after a traffic indication map TIM field in the beacon frame.

Optionally, the low power information includes a first check field, and the first check field is used to carry a check value of data carried from a frame header of the first beacon frame to a previous field of the first check field.

Optionally, the low power information is located in a frame body part of the first beacon frame.

Optionally, the low power information includes a traffic indication map TIM field and a second check field, where the traffic indication map TIM field is located before the second check field, and the second check field is used to carry a check value of data carried from a 1^{st} field to a previous field of the second check field in the low power information.

FIG. 25 is a block diagram of another station device 2500 according to an embodiment of this application. The station device 2500 shown in FIG. 25 includes a first sending module 2510, a first connection module 2520, a second connection module 2530, a third connection module 2540, and a receiving module 2550.

The first sending module 2510 is configured to send a probe request, where the probe request carries a low power mark.

The first connection module 2520 is configured to: if a second probe response sent by an access point device is received, establish a second connection to the access point device.

The second connection module 2530 is configured to receive, through the second connection, a basic service set transition request sent by the access point device, where the basic service set transition request is used by the station device to establish a first connection to the access point device.

The third connection module 2540 is configured to establish the first connection to the access point device based on the basic service set transition request.

The receiving module 2550 is configured to receive a third beacon frame that corresponds to the first connection and that is sent by the access point device, where a length of the third beacon frame is less than 130 bytes.

Optionally, after the sending a probe request, the station device further includes:
a fourth connection module, configured to: if a first probe response and a second probe response that are sent by the access point device are received, where the first probe response carries a low power mark, establish a first connection to the access point device based on the low power mark.

Optionally, the establishing a first connection to the access point device based on the low power mark includes:
displaying a first wireless access icon corresponding to the first probe response and a second wireless access icon corresponding to the second probe response, where the first wireless access icon includes a low power icon corresponding to the low power mark; and
establishing the first connection to the access point device in response to a selection operation performed by a user on the first wireless access icon.

Optionally, the low power mark is located in a frame body part of the third beacon frame.

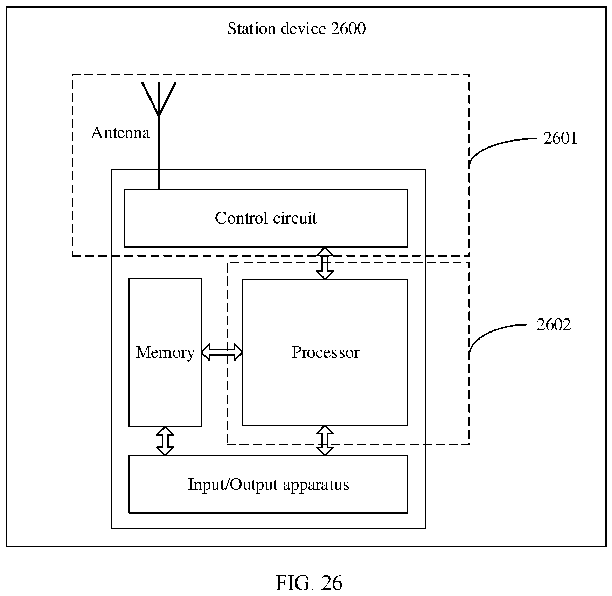

Based on the foregoing embodiment, FIG. 26 is a diagram of a structure of a station device 2600 according to an embodiment of this application. The station device 2600 may be applied to the wireless access system shown in FIG. 1, and perform functions of the station device 2600 in the foregoing method embodiments. For ease of description, FIG. 26 shows only main components of the station device 2600. As shown in FIG. 26, the station device 2600 includes a processor 2602, a memory, a control circuit, an antenna, and an input/output apparatus. The processor 2602 is mainly configured to: process a communication protocol and communication data, control the entire station device 2600, execute a software program, and process data of the software program, for example, is configured to support the station device 2600 in performing actions described in the foregoing method embodiments. The memory is mainly configured to store the software program and data. The control circuit is mainly configured to: convert a baseband signal and a radio frequency signal and process the radio frequency signal. The control circuit and the antenna may also be referred to as a transceiver 2601, and is mainly configured to receive and send a radio frequency signal in a form of an electromagnetic wave. The input/output apparatus, like a touchscreen, a display, or a keyboard, is mainly configured to: receive data input by a user and output data to the user.

After the station device 2600 is powered on, the processor 2602 may read a software program in a storage unit, interpret and execute instructions of the software program, and process data of the software program. When data needs to be sent wirelessly, the processor 2602 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the station device 2600, the radio frequency circuit receives a radio frequency signal by using the antenna, converts the radio frequency signal into a baseband signal, and outputs the baseband signal to the processor. The processor converts the baseband signal into data and processes the data.

A person skilled in the art may understand that, for ease of description, FIG. 26 shows only one memory and one processor. In an actual station device 2600, there may be a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data. The central processing unit is mainly configured to: control the entire station device 2600, execute a software program, and process data of the software program. The processor in FIG. 26 may integrate functions of the baseband processor and the central processing unit. A person skilled in the art may understand that the baseband processor and the central processing unit each may be an independent processor, and are interconnected through a technology like a bus. A person skilled in the art may understand that the station device 2600 may include a plurality of baseband processors to adapt to different network standards, the station device 2600 may include a plurality of central processing units to enhance a processing capability of the station device 2600, and components of the station device 2600 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

Based on the wireless access method provided in the foregoing embodiments, this embodiment of this application further provides the following content.

An embodiment provides a computer program product. The program product includes a program. When the program is run by an access point device and/or a station device, the access point device and/or the station device are/is enabled to perform the wireless access method shown in the foregoing embodiments.

An embodiment of this application provides a computer-readable storage medium. The computer-readable storage medium stores a computer program. When the computer program is executed by a processor, the wireless access methods in the foregoing embodiments are performed.

An embodiment of this application provides a chip system. The chip system includes a memory and a processor. The processor executes a computer program stored in the memory, to control the foregoing electronic device to perform the wireless access methods shown in the foregoing embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person skilled in the art may clearly understand that, for the purpose of convenient and brief description, division into the foregoing functional units and modules is merely used as an example for illustration. During actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

In the foregoing embodiments, the descriptions of each embodiment have respective focuses. For a part that is not described in detail or recorded in an embodiment, refer to related descriptions in other embodiments.

In the descriptions of embodiments of this application, the terms used in the foregoing embodiments are merely intended to describe specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include specific features, structures, or characteristics described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

Sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless access method, applied to a station device, wherein the method comprises:
receiving a first beacon frame sent by an access point device, wherein the first beacon frame carries low power information;
determining a receiving length based on a location of the low power information in the first beacon frame; and
receiving, based on the receiving length, a second beacon frame sent by the access point device, wherein the receiving length is less than an original length of the second beacon frame, and the second beacon frame and the first beacon frame are in a same format.

2. The wireless access method according to claim 1, wherein the first beacon frame is a 1^{st} beacon frame that is sent by the access point device and that is received by the station device after the station device establishes a connection to the access point device, and the second beacon frame is a beacon frame received by the station device after the station device receives the first beacon frame.

3. The wireless access method according to claim 1 or 2, wherein the receiving length is a sum of an offset of the low power information in the first beacon frame and a length value of the low power information.

4. The wireless access method according to claim 3, wherein the method further comprises: storing the offset and the length value in a preset register.

5. The wireless access method according to any one of claims 1 to 4, wherein the low power information is located after a traffic indication map TIM field in the first beacon frame.

6. The wireless access method according to any one of claims 1 to 5, wherein the low power information comprises a first check field, and the first check field is used to carry a check value of data carried from a frame header of the first beacon frame to a previous field of the first check field.

7. The wireless access method according to any one of claims 1 to 4, wherein the low power information is located in a frame body part of the first beacon frame.

8. The wireless access method according to any one of claims 1 to 4, and claim 7, wherein the low power information comprises a traffic indication map TIM field and a second check field, the traffic indication map TIM field is located before the second check field, and the second check field is used to carry a check value of data carried from a 1^{st} field to a previous field of the second check field in the low power information.

9. A wireless access method, applied to an access point device, wherein the method comprises:
generating a beacon frame; and
sending the beacon frame to a station device, wherein the beacon frame carries low power information, and the low power information is used by the station device to determine a receiving length of the beacon frame.

10. The wireless access method according to claim 9, wherein the generating a beacon frame comprises:
obtaining a preset frame format and the low power information;
adding the low power information after a traffic indication map TIM field in the preset frame format, to obtain a first target frame format; and
generating the beacon frame based on the first target frame format and to-be-carried data.

11. The wireless access method according to claim 9 or 10, wherein the low power information comprises a first check field, and the first check field is used to carry a check value of data carried from a frame header of the beacon frame to a previous field of the first check field.

12. The wireless access method according to claim 9, wherein the generating a beacon frame comprises:
obtaining a preset frame format and the low power information;
adding the low power information to a frame body part of the preset frame format, to obtain a second target frame format; and
generating the beacon frame based on the second target frame format and to-be-carried data.

13. The wireless access method according to claim 9 or 12, wherein the low power information comprises a traffic indication map TIM field and a second check field, the traffic indication map TIM field is located before the second check field, and the second check field is used to carry a check value of data carried from a 1^{st} field to a previous field of the second check field in the low power information.

14. The wireless access method according to any one of claims 9 to 13, wherein the receiving length is a sum of an offset of the low power information in the beacon frame and a length value of the low power information.

15. A wireless access method, applied to an access point device, wherein the method comprises:
receiving a probe request sent by a first station device, wherein the probe request carries a low power mark;
sending a first probe response and a second probe response to the first station device, wherein the first probe response carries the low power mark, the first probe response is used to establish a first connection to the first station device, and the second probe response is used to establish a second connection to the first station device;
if the access point device establishes the second connection to the first station device based on the second probe response, establishing the first connection to the first station device by using a basic service set transition request; and
sending a third beacon frame corresponding to the first connection, wherein a length of the third beacon frame is less than 130 bytes, and the third beacon frame carries the low power mark.

16. The wireless access method according to claim 15, wherein the low power mark is located in a frame body part of the third beacon frame.

17. The wireless access method according to claim 15 or 16, wherein the method further comprises:
establishing a second connection to a second station device; and
sending a fourth beacon frame corresponding to the second connection, wherein a length of the fourth beacon frame is greater than 130 bytes.

18. A wireless access method, applied to a station device, wherein the method comprises:
sending a probe request, wherein the probe request carries a low power mark;
if a second probe response sent by an access point device is received, establishing a second connection to the access point device;
receiving, through the second connection, a basic service set transition request sent by the access point device, wherein the basic service set transition request is used by the station device to establish a first connection to the access point device;
establishing the first connection to the access point device based on the basic service set transition request; and
receiving a third beacon frame that corresponds to the first connection and that is sent by the access point device, wherein a length of the third beacon frame is less than 130 bytes.

19. The wireless access method according to claim 18, wherein after the sending a probe request, the method further comprises:
if a first probe response and the second probe response that are sent by the access point device are received, wherein the first probe response carries the low power mark, establishing the first connection to the access point device based on the low power mark.

20. The wireless access method according to claim 19, wherein the establishing the first connection to the access point device based on the low power mark comprises:
displaying a first wireless access icon corresponding to the first probe response and a second wireless access icon corresponding to the second probe response, wherein the first wireless access icon comprises a low power icon corresponding to the low power mark; and
establishing the first connection to the access point device in response to a selection operation performed by a user on the first wireless access icon.

21. The wireless access method according to any one of claims 18 to 20, wherein the low power mark is located in a frame body part of the third beacon frame.

22. A station device, comprising at least one processor, wherein the at least one processor is configured to: be coupled to a memory, and read and execute instructions in the memory, to implement the method according to any one of claims 1 to 8 or the method according to any one of claims 18 to 21.

23. An access point device, comprising at least one processor, wherein the at least one processor is configured to: be coupled to a memory, and read and execute instructions in the memory, to implement the method according to any one of claims 9 to 14 or the method according to any one of claims 15 to 17.

24. A wireless access system, comprising at least one station device according to claim 22 and the access point device according to claim 23.

25. A computer-readable storage medium, wherein the computer-readable storage medium stores a computer program, and when the computer program is run on a computer, the computer is enabled to perform the method according to any one of claims 1 to 21.
